# EUROPEAN PATENT APPLICATION

(11) **EP 4 832 237 A1**
(43) Date of publication of application: **28.10.2026**
(21) Application number: 24914585.5
(22) Date of filing: 03.01.2024
(51) Int. Cl.: H01M 50/593

(54) **BATTERY CELL, BATTERY, AND ELECTRIC DEVICE**

(71) Applicant: Contemporary Amperex Technology Co., Limited, Ningde, Fujian 352100 (CN)
(72) Inventor: WU, Yizhen, Ningde, Fujian 352100 (CN); KE, Jianhuang, Ningde, Fujian 352100 (CN); YANG, Jianxiong, Ningde, Fujian 352100 (CN); DING, Youcai, Ningde, Fujian 352100 (CN); LI, Yanpeng, Ningde, Fujian 352100 (CN)
(74) Representative: Kraus & Lederer PartGmbB
(86) International application number: PCT/CN2024/070465
(87) International publication number: WO 2025/145352

(57) **Abstract**

A cell (20), a battery (100), and an electric device. The cell (20) includes a can (21), an electrode assembly (22), a first insulating member (23), and a second insulating member (24). The can (21) shares a first wall portion (213). The electrode assembly (22) is accommodated in the can (21). The electrode assembly (22) includes a first electrode lead-out portion (222) and a main portion (221). The first electrode lead-out portion (222) is arranged at an end of the main portion (221) facing the first wall portion (213) along a first direction. Along the first direction, the first insulating member (23) is arranged on a surface of the first wall portion (213) facing the electrode assembly (22). The first insulating member (23) is configured to insulate and isolate the first electrode lead-out portion (222) from the first wall portion (213). At least a part of the second insulating member (24) is arranged between the first electrode lead-out portion (222) and the first wall portion (213) along the first direction. A material damage temperature of the second insulating member (24) is higher than a material damage temperature of the first insulating member (23). The second insulating member (24) can insulate and isolate the first electrode lead-out portion (222) from the first wall portion (213) when the first insulating member (23) melts. After the first insulating member (23) melts, the second insulating member (24) can further implement insulation and isolation functions, to reduce a risk of a short circuit and improve reliability of a battery.

## Description

### TECHNICAL FIELD

The present application relates to the field of batteries, and specifically, to a cell, a battery, and an electric device.

### BACKGROUND

Batteries are widely used in the field of new energy such as electric vehicles and new energy vehicles. New energy vehicles and electric vehicles have become a new development trend in the automotive industry. For the development of battery technologies, various design factors, for example, performance parameters such as a battery life, an energy density, a discharge capacity, and a charge-discharge rate, all need to be taken into account. In addition, reliability of a battery also needs to be taken into account. However, reliability of the existing batteries is poor.

### SUMMARY

An objective of embodiments of the present application is to provide a cell, a battery, and an electric device, which aims to alleviate poor reliability of a battery in the related art.

According to a first aspect, an embodiment of the present application provides a cell. The cell includes a can, an electrode assembly, a first insulating member, and a second insulating member. The can has a first wall portion. The electrode assembly is accommodated in the can, and includes a first electrode lead-out portion and a main portion. The first electrode lead-out portion is arranged at an end of the main portion facing the first wall portion along a first direction. Along the first direction, the first insulating member is arranged on a surface of the first wall portion facing the electrode assembly, and the first insulating member is configured to insulate and isolate the first electrode lead-out portion from the first wall portion. Along the first direction, at least a part of the second insulating member is arranged between the first electrode lead-out portion and the first wall portion. A material damage temperature of the second insulating member is higher than a material damage temperature of the first insulating member. The second insulating member is configured to insulate and isolate the first electrode lead-out portion from the first wall portion when the first insulating member melts.

In the foregoing technical solution, the first insulating member and the second insulating member are arranged on the cell. During normal use, both the first insulating member and the second insulating member can insulate and isolate the first electrode lead-out portion from the first wall portion, to reduce a risk that a short circuit occurs due to contact between the first electrode lead-out portion and the first wall portion. Because the material damage temperature of the second insulating member is higher than the material damage temperature of the first insulating member, when another cell adjacent to the cell experiences thermal runaway, causing the first insulating member of the cell to melt, the second insulating member can still insulate and isolate the first electrode lead-out portion from the first wall portion to some extent, thereby reducing a risk that a short circuit occurs due to contact between the first electrode lead-out portion and the first wall portion. In this way, even if another cell adjacent to the cell experiences thermal runaway, it is less prone to a short circuit of the cell that further causes thermal runaway, which is beneficial to limiting thermal propagation and improving reliability of the cell.

In an optional technical solution of this embodiment of the present application, the second insulating member is connected to the first electrode lead-out portion.

In the foregoing technical solution, the second insulating member is connected to the first electrode lead-out portion. Because the first insulating member is arranged on the surface of the first wall portion facing the electrode assembly, it is more convenient to connect the second insulating member to the first electrode lead-out portion, which is less prone to interference with the first insulating member. In addition, the second insulating member is connected to the first electrode lead-out portion, which limits a relative position between the second insulating member and the first electrode lead-out portion, so that the second insulating member can be stably positioned between the first electrode lead-out portion and the first wall portion, to insulate and isolate the first electrode lead-out portion from the first wall portion.

In an optional technical solution of this embodiment of the present application, the cell includes a first electrode terminal, arranged on the first wall portion. The first electrode lead-out portion includes a first electrode tab and a first current collecting member. The first electrode tab is connected to an end of the main portion facing the first wall portion along the first direction. The first current collecting member is connected to the first electrode terminal and the first electrode tab. The second insulating member is connected to the first current collecting member. Along the first direction, the second insulating member is at least partially located between the first current collecting member and the first wall portion.

In the foregoing technical solution, the first electrode tab is connected to the first electrode terminal by the first current collecting member, and the first current collecting member has a risk that a short circuit occurs due to contact with the first wall portion. Therefore, the second insulating member is connected to the first current collecting member, and the second insulating member is at least partially located between the first current collecting member and the first wall portion, to insulate and isolate the first current collecting member from the first wall portion, thereby reducing a risk that a short circuit occurs on the cell, and helping improve reliability of the cell.

In an optional technical solution of this embodiment of the present application, the first current collecting member includes a body portion and a protruding portion. The protruding portion protrudes from the body portion along the first direction, the body portion is connected to the first electrode tab. The protruding portion is connected to the first electrode terminal. Along the first direction, the body portion has a first surface closest to the first wall portion, and the second insulating member covers at least a part of the first surface.

In the foregoing technical solution, the first surface is a surface of the body portion closest to the first wall portion, that is, the first surface is a surface of the first current collecting member that is most prone to come into contact with the first wall portion to cause a short circuit. The second insulating member covers at least a part of the first surface, to insulate and isolate the first current collecting member from the first wall portion, so that the second insulating member has a good insulation effect, which helps reduce a risk that a short circuit occurs on the cell, and helps improve reliability of the cell.

In an optional technical solution of this embodiment of the present application, along the first direction, the body portion includes a first connecting portion and a second connecting portion. The second connecting portion is connected to the first connecting portion, and the first electrode tab is connected to the first connecting portion. Along the first direction, a surface of the first connecting portion facing the first wall portion is the first surface, the second connecting portion has a second surface facing the first wall portion, the first surface is closer to the first wall portion than the second surface, the protruding portion protrudes from the second surface, and the second insulating member covers at least a part of the second surface.

In the foregoing technical solution, the body portion includes the first surface and the second surface. The first surface is a surface closest to the first wall portion. A distance between the second surface and the first wall portion is greater than a distance between the first surface and the first wall portion. Because both the first surface and the second surface have a risk of coming into contact with the first wall portion to cause a short circuit, the second insulating member is enabled to cover at least a part of the first surface and cover at least a part of the second surface, to help better insulate and isolate the first current collecting member from the first wall portion, so that the second insulating member has a better insulation effect, which further helps reduce a risk that a short circuit occurs on the cell, and helps improve reliability of the cell.

In an optional technical solution of this embodiment of the present application, the cell includes a plurality of electrode assemblies, arranged along a second direction. The second direction intersects with the first direction. The second surface includes a covered region covered by the second insulating member and a non-covered region not covered by the second insulating member. Along the second direction, two sides of the non-covered region are each connected to the covered region, and the protruding portion is arranged in the non-covered region.

In the foregoing technical solution, two sides of the non-covered region are each connected to the covered region. In comparison, the covered region is closer to another cell adjacent to the cell. When the another cell experiences thermal runaway, along the second direction, regions of the first insulating member close to two ends have higher temperatures, and are more prone to be melted. A position of the first insulating member close to the middle has a lower temperature, and is less prone to be melted. The covered region corresponds to a region in which the first insulating member is prone to be melted, and the non-covered region corresponds to a region in which the first insulating member is less prone to be melted. Cooperation between the first insulating member and the second insulating member can effectively insulate and isolate the first current collecting member from the first wall portion, which helps reduce a risk that a short circuit occurs on the cell, and helps improve reliability of the cell.

In an optional technical solution of this embodiment of the present application, the cell includes a plurality of electrode assemblies, arranged along a second direction. The second direction intersects with the first direction. The body portion includes a plurality of first connecting portions, arranged at intervals along the second direction. The second connecting portion is connected to the plurality of first connecting portions. Each of the first connecting portions is connected to the first electrode tab of one of the electrode assemblies.

In the foregoing technical solution, each of the first connecting portions is connected to the first electrode tab of one of the electrode assemblies, and the second connecting portion is connected to the plurality of first connecting portions, to electrically connect the first current collecting member and the first electrode tabs of the plurality of electrode assemblies 22. The first electrode tabs of the plurality of electrode assemblies are connected to the first electrode terminal by the first current collecting member, to help reduce difficulty of assembly between the first electrode tabs and the first electrode terminal.

In an optional technical solution of this embodiment of the present application, along the first direction, the second insulating member completely covers a region that is of a surface of the body portion facing the first wall portion and that is not occupied by the protruding portion.

In the foregoing technical solution, by enabling the second insulating member to completely cover the region that is of the surface of the body portion facing the first wall portion and that is not occupied by the protruding portion, the second insulating member has a better insulation effect, which further reduces a risk that a short circuit occurs on the cell, and helps improve reliability of the cell.

In an optional technical solution of this embodiment of the present application, the second insulating member is provided with a clearance hole. The protruding portion passes through the clearance hole and is connected to the first electrode terminal.

In the foregoing technical solution, the clearance hole is provided on the second insulating member to allow the protruding portion to pass through, to help the protruding portion to connect to the first electrode terminal, thereby helping reduce material consumption of the second insulating member. In addition, because the protruding portion passes through the clearance hole, cooperation between the clearance hole and the protruding portion limits a position of the second insulating member, making the second insulating member less prone to deviate or shift, so that the second insulating member can better implement an insulation function.

In an optional technical solution of this embodiment of the present application, the first electrode tab is connected to a side of the first current collecting member facing away from the first wall portion.

In the foregoing technical solution, when the first electrode tab is connected to the side of the first current collecting member facing away from the first wall portion, compared with the first electrode tab, the first current collecting member is more prone to come into contact with the first wall portion to cause a short circuit. In this case, the second insulating member is connected to the first current collecting member, and the second insulating member is at least partially located between the first current collecting member and the first wall portion, to insulate and isolate the first current collecting member from the first wall portion, so that the second insulating member can produce a better insulation effect, thereby further reducing a risk that a short circuit occurs on the cell, and helping improve reliability of the cell.

In an optional technical solution of this embodiment of the present application, the cell includes a first electrode terminal, arranged on the first wall portion. The first electrode lead-out portion includes a first electrode tab and a first current collecting member. The first electrode tab is connected to an end of the main portion facing the first wall portion along the first direction. The first electrode tab is connected to a surface of the first current collecting member facing the first wall portion. The first current collecting member is connected to the first electrode terminal. The second insulating member is connected to a surface of the first electrode tab closest to the first wall portion.

In the foregoing technical solution, the first electrode tab is connected to the first electrode terminal by the first current collecting member, but the first electrode tab is connected to a surface of the first current collecting member facing the first wall portion. Compared with the first current collecting member, the first electrode tab is more prone to come into contact with the first wall portion to cause a short circuit. In this case, the second insulating member is connected to the surface of the first electrode tab closest to the first wall portion, to insulate and isolate the first electrode tab from the first wall portion, so that the second insulating member can produce a better insulation effect, which helps reduce a risk that a short circuit occurs on the cell, and helps improve reliability of the cell.

In an optional technical solution of this embodiment of the present application, the cell includes a first electrode terminal, arranged on the first wall portion. The first electrode lead-out portion includes a first electrode tab. The first electrode tab is connected to the first electrode terminal. The second insulating member is connected to the first electrode tab, and along the first direction, the second insulating member is at least partially located between the first electrode tab and the first wall portion.

In the foregoing technical solution, the first electrode tab is directly connected to the first electrode terminal, the second insulating member is connected to the first electrode tab, and the second insulating member is at least partially located between the first electrode tab and the first wall portion, to insulate and isolate the first electrode tab from the first wall portion, so that the second insulating member has a better insulation effect, thereby further reducing a risk that a short circuit occurs on the cell, and helping improve reliability of the cell.

In an optional technical solution of this embodiment of the present application, along the first direction, a projection of the second insulating member does not overlap with a projection of the first electrode terminal.

In the foregoing technical solution, the projection of the second insulating member along the first direction does not overlap with the projection of the first electrode terminal along the first direction, to reduce a risk that the second insulating member interferes with the connection between the first electrode terminal and the first electrode tab, thereby helping connect the first electrode terminal to the first electrode tab.

In an optional technical solution of this embodiment of the present application, the second insulating member is provided with a clearance hole. The first electrode terminal passes through the clearance hole and is connected to the first electrode tab.

In the foregoing technical solution, the clearance hole is provided on the second insulating member to allow the first electrode terminal to pass through, to help the first electrode tab to connect to the first electrode terminal, thereby helping reduce material consumption of the second insulating member. In addition, because the first electrode terminal passes through the clearance hole, cooperation between the clearance hole and the first electrode terminal limits a position of the second insulating member, making the second insulating member less prone to deviate or shift, so that the second insulating member can better implement an insulation function.

In an optional technical solution of this embodiment of the present application, the second insulating member is adhered to the first electrode lead-out portion.

In the foregoing technical solution, the second insulating member is adhered to the first electrode lead-out portion, so that the second insulating member is simply and conveniently connected to the first electrode lead-out portion, which helps limit a position of the second insulating member, so that the second insulating member can stably produce an insulation effect.

In an optional technical solution of this embodiment of the present application, the second insulating member covers the first electrode lead-out portion.

In the foregoing technical solution, the second insulating member covers the first electrode lead-out portion, so that the first electrode lead-out portion can be well covered, thereby insulating and isolating the first electrode lead-out portion from the first wall portion. In addition, when the second insulating member covers the first electrode lead-out portion, the second insulating member is not prone to deviate or shift relative to the first electrode lead-out portion, so that the second insulating member can better implement an insulation function.

In an optional technical solution of this embodiment of the present application, the second insulating member is an insulating film connected to the first electrode lead-out portion.

In the foregoing technical solution, the second insulating member is an insulating film. The insulating film can effectively insulate and isolate the first electrode lead-out portion from the first wall portion without occupying too much space inside the can, so that the cell can still have a high energy density.

In an optional technical solution of this embodiment of the present application, a material damage temperature of the second insulating member is higher than or equal to 300°C.

In the foregoing technical solution, when thermal runaway occurs on another cell adjacent to the cell, a temperature inside the cell may rise to 200°C. However, the material damage temperature of the second insulating member is higher than or equal to 300°C. Therefore, when the another cell adjacent to the cell experiences thermal runaway, the second insulating member is not prone to melt, so that the second insulating member can implement an insulation and isolation function, thereby reducing a risk that a short circuit occurs on the cell.

In an optional technical solution of this embodiment of the present application, a material of the second insulating member includes at least one of polyimide, polyetheretherketone, and polytetrafluoroethylene.

In the foregoing technical solution, the polyimide, polyetheretherketone, and polytetrafluoroethylene have good high-temperature resistance performance, and have good insulation effects, so that the first electrode lead-out portion can be insulated and isolated from the first wall portion when the temperature is higher than 200°C, thereby reducing a risk that a short circuit occurs on the cell, and improving reliability of the cell.

In an optional technical solution of this embodiment of the present application, a positive electrode material of the cell includes a lithium-containing phosphate.

In the foregoing technical solution, the cell whose positive electrode material includes the lithium-containing phosphate generates a large amount of heat when experiencing thermal runaway, which is prone to melt the first insulating member of the cell and a first insulating member of another cell adjacent to the cell. The second insulating member is arranged inside the cell, which helps reduce a risk that the first electrode lead-out portion comes into contact with the first wall portion to cause a short circuit. That is, arranging the second insulating member in the cell whose positive electrode material includes the lithium-containing phosphate has a better effect.

In an optional technical solution of this embodiment of the present application, the lithium-containing phosphate includes at least one of lithium iron phosphate, a composite material of lithium iron phosphate and carbon, lithium manganese phosphate, a composite material of lithium manganese phosphate and carbon, lithium manganese iron phosphate, and a composite material of lithium manganese iron phosphate and carbon.

According to a second aspect, an embodiment of the present application further provides a battery. The battery includes the foregoing cell.

According to a third aspect, an embodiment of the present application further provides an electric device. The electric device includes the foregoing cell.

### BRIEF DESCRIPTION OF THE DRAWINGS

To illustrate the technical solutions of embodiments of the present application more clearly, the following briefly introduces the accompanying drawings required in embodiments of the present application. Obviously, the accompanying drawings described below are only some embodiments of the present application. For a person of ordinary skill in the art, other drawings can also be obtained according to the drawings without any creative work.
FIG. 1 is a schematic structural diagram of a vehicle according to some embodiments of the present application;
FIG. 2 is an exploded view of a battery according to some embodiments of the present application;
FIG. 3 is a schematic structural diagram of a cell according to some embodiments of the present application;
FIG. 4 is an exploded view of a cell according to some embodiments of the present application;
FIG. 5 is a schematic structural diagram of a second insulating member connected to a first current collecting member according to some embodiments of the present application;
FIG. 6 is an exploded view of a second insulating member and a first current collecting member according to some embodiments of the present application;
FIG. 7 is a schematic structural diagram of a second insulating member connected to a first current collecting member according to some other embodiments of the present application;
FIG. 8 is an exploded view of a second insulating member and a first current collecting member according to some other embodiments of the present application;
FIG. 9 is a schematic structural diagram of a second insulating member connected to a first current collecting member according to still some other embodiments of the present application;
FIG. 10 is an exploded view of a second insulating member and a first current collecting member according to still some embodiments of the present application; and
FIG. 11 is an exploded view of a cell according to yet some other embodiments of the present application.

Reference signs: 10-box body; 11-first portion; 12-second portion; 20-cell; 21-can; 211-end lid; 212-case; 213-first wall portion; 22-electrode assembly; 221-main portion; 222-first electrode lead-out portion; 2221-first electrode tab; 2222-first current collecting member; 22221-body portion; 22222-protruding portion; 2222a-first surface; 2222b-second surface; 2222c-third surface; 22223-first connecting portion; 22224-second connecting portion; 22225-covered region; 22226-non-covered region; 223-second electrode lead-out portion; 2231-second electrode tab; 2232-second current collecting member; 23-first insulating member; 24-second insulating member; 241-clearance hole; 25-first electrode terminal; 26-third insulating member; 27-second electrode terminal; 100-battery; 200-controller; 300-motor; 1000-vehicle.

### DETAILED DESCRIPTION

To make the objectives, technical solutions, and advantages of embodiments of the present application clearer, the following clearly describes the technical solutions in the embodiments of the present application with reference to the accompanying drawings in the embodiments of the present application. Apparently, the described embodiments are some of the embodiments of the present application rather than all the embodiments. All other embodiments obtained by a person of ordinary skill in the art based on the embodiments of the present application without making creative efforts shall fall within the protection scope of the present application.

Unless otherwise defined, all technical and scientific terms used herein have the same meanings as what is normally understood by a person skilled in the technical field of the present application. The terms used in the specification of the present application are merely intended to describe specific embodiments but not intended to limit the present application. The terms "include", "have" and any other variants in the specification, claims, and description of accompanying drawings of the present application mean to cover the non-exclusive inclusion. The terms "first", "second", and the like in the description and claims of the present application or the above drawings are used to distinguish different objects, rather than to describe a specific order or primary and secondary relationship.

In the present application, the phase "embodiment" mentioned means that the specific features, structures, or characteristics described with reference to the embodiments can be included in at least one embodiment of the present application. The phrase appearing at various positions in this specification may neither necessarily mean a same embodiment, nor mean an independent or optional embodiment exclusive from another embodiment.

In the description of the present application, it should be noted that, unless otherwise explicitly specified or defined, the terms, such as "install", "connect", "connection", and "attach", should be understood in a broad sense. For example, the connection may be a fixed connection, a detachable connection, or an integral connection; or the connection may be a direct connection, an indirect connection through an intermediary, or internal communication between two components. A person of ordinary skill in the art can understand specific meanings of the terms in the present application based on specific situations.

The term "and/or" in the present application describes only an association relationship for describing associated objects and represents that three relationships may exist. For example, A and/or B may represent the following three cases: Only A exists, both A and B exist, and only B exists. In addition, the character "/" in the present application generally indicates that the associated objects have an "or" relationship.

In the embodiments of the present application, the same reference signs denote the same components, and for the sake of brevity, detailed descriptions of the same components are omitted in different embodiments. It should be understood that the thickness, length, width and other dimensions of various components in the embodiments of the present application shown in the drawings, as well as the overall dimensions, such as a thickness, a length, and a width, of the integrated device are only exemplary descriptions, and should not constitute any limitation to the present application.

The phrase "plurality of" appearing in the present application means two or more (including two).

In embodiments of the present application, the cell may be a secondary battery. A secondary battery refers to a cell that can be recharged to activate active materials and continue to be used after the cells are discharged.

The cell may be a lithium ion battery, a sodium ion battery, a sodium lithium ion battery, a lithium metal battery, a sodium metal battery, a lithium sulfur battery, a magnesium ion battery, a nickel hydrogen battery, a nickel cadmium battery, a lead storage battery, or the like, which is not limited in the embodiments of the present application.

The cell generally includes an electrode assembly. The electrode assembly includes a positive electrode, a negative electrode, and a separator. During charge and discharge of the cell, active ions (such as lithium ions) intercalate and de-intercalate back and forth between the positive electrode and the negative electrode. Arranged between the positive electrode and the negative electrode, the separator serves to prevent a short circuit between the positive electrode and the negative electrode and allow passage of the active ions.

In some embodiments, the positive electrode can be a positive electrode plate. The positive electrode plate can include a positive electrode current collector and a positive electrode active material arranged on at least one surface of the positive electrode current collector.

For example, the positive electrode current collector has two surfaces opposite to each other in a thickness direction of the positive electrode current collector, and the positive electrode active material is arranged on either or both of the two opposite surfaces of the positive electrode current collector.

For example, the positive electrode current collector may be a metal foil or a composite current collector. For example, as the metal foil, aluminum with a silver-plated surface stainless steel with a silver-plated surface, stainless steel, copper, aluminum, nickel, a carbon electrode, carbon, nickel, titanium, or the like may be used. The composite current collector can include a polymer material substrate layer and a metal layer. The composite current collector can be formed by forming a metal material (aluminum, an aluminum alloy, nickel, a nickel alloy, titanium, a titanium alloy, silver, a silver alloy, or the like) on a polymer material substrate (for example, a substrate of polypropylene, polyethylene terephthalate, polybutylene terephthalate, polystyrene, polyethylene, or the like).

For example, the positive electrode active material may include at least one of the following materials: a lithium-containing phosphate, a lithium transition metal oxide, and respective modified compounds thereof. However, the present application is not limited to these materials, and other conventional materials that can be used as positive electrode active materials for batteries can also be used. It is possible to use only one of these positive active materials alone, or to use more than two in combination. An example of the lithium-containing phosphate may include, but is not limited to, at least one of lithium iron phosphate (for example, LiFePO₄ (also referred to as LFP for short)), a composite material of lithium iron phosphate and carbon, lithium manganese phosphate (for example, LiMnPO₄), a composite material of lithium manganese phosphate and carbon, lithium manganese iron phosphate, and a composite material of lithium manganese iron phosphate and carbon. An example of the lithium transition metal oxide may include, but is not limited to, a lithium cobalt oxide (such as LiCoO₂), a lithium nickel oxide (such as LiNiO₂), a lithium manganese oxide (such as LiMnO₂ or LiMn₂O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂ (also referred to as NCM₃₃₃ for short), LiNi_{0.5}Co_{0.2}Mn_{0.3}O₂ (also referred to as NCM₅₂₃ for short), LiNi_{0.5}Co_{0.25}Mn_{0.25}O₂ (also referred to as NCM₂₁₁ for short), LiNi_{0.6}Co_{0.2}Mn_{0.2}O₂ (also referred to as NCM₆₂₂ for short), LiNi_{0.8}Co_{0.1}Mn_{0.1}O₂ (also referred to as NCM₈₁₁ for short), a lithium nickel cobalt aluminum oxide (such as LiNi_{0.85}Co_{0.15}Al_{0.05}O₂), and at least one of their modified compounds.

In some embodiments, the positive electrode may be made of foamed metal. The foamed metal may be foamed nickel, foamed copper, foamed aluminum, foamed alloy, or the like. When the foam metal is used as the positive electrode, the surface of the foam metal may not be provided with the positive electrode active material. Certainly, a positive electrode active material may also be provided. For example, a lithium source material, potassium metal, or sodium metal may further be filled and/or deposited in the foamed metal, and the lithium source material is lithium metal and/or a lithium-rich material.

In some embodiments, the negative electrode may be a negative electrode plate. The negative electrode plate may include a negative electrode current collector.

For example, the negative electrode current collector may be a metal foil, a foam metal, or a composite current collector. For example, as the metal foil, a silver-surface-processed aluminum or stainless steel, copper, aluminum, nickel, a carbon electrode, nickel, titanium, or the like may be used. The foamed metal may be foamed nickel, foamed copper, foamed aluminum, foamed alloy, or the like. The composite current collector can include a polymer material substrate layer and a metal layer. The composite current collector can be formed by forming a metal material (copper, copper alloys, nickel, nickel alloys, titanium, titanium alloys, silver and silver alloys, or the like) on a polymer material substrate (for example, a substrate of polypropylene, polyethylene terephthalate, polybutylene terephthalate, polystyrene, polyethylene, or the like).

By way of example, the negative electrode plate can include a negative electrode current collector and a negative electrode active material arranged on at least one surface of the negative electrode current collector.

For example, the negative electrode current collector has two surfaces opposite to each other in its own thickness direction, and the negative electrode material is provided on either or both of the two opposite surfaces the negative electrode current collector.

For example, the negative electrode active material can be a negative electrode active material well known in the art for cells. For example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, silicon oxide, a silicon-carbon composite, a silicon-nitride composite, and a silicon alloy. The tin-based material may be selected from at least one of elemental tin, tin oxide, and a tin alloy. However, the present application is not limited to these materials, and other conventional materials that can be used as the negative electrode active material of the battery may also be used. These negative electrode active materials may be used individually or in combination of more than two thereof.

In some embodiments, a material of the positive electrode current collector may be aluminum, and a material of the negative electrode current collector may be copper.

In some implementations, the electrode assembly further includes a separator, and the separator is arranged between the positive electrode and the negative electrode.

In some implementations, the separator is a separator film. There may be a plurality of types of separator films. Any well-known separator film of a porous structure having good chemical stability and mechanical stability may be used as the separator film.

For example, a material of the separator film may include at least one of glass fiber, non-woven fabric, polyethylene, polypropylene, and polyvinylidene fluoride. The separator film may be a single-layer film, or may be a multilayer composite film. When the separator film is a multilayer composite film, each layer may be made of the same or different materials. The separator may be a separator component located between the positive and negative electrodes, or may be attached to the surfaces of the positive and negative electrodes.

In some implementations, the separator is a solid electrolyte. The solid-state electrolyte is provided between the positive electrode and the negative electrode, and also functions to transmit ions and isolate the positive electrode and the negative electrode.

In some implementations, the cell further includes an electrolyte, and the electrolyte transmits ions between the positive electrode and the negative electrode. The electrolyte may be in a liquid, gel, or solid state. The liquid-state electrolyte includes an electrolyte salt and a solvent.

In some implementations, the electrolytic salt may include at least one of lithium hexafluorophosphate, lithium tetrafluoroborate, lithium perchlorate, lithium hexafluoroborate, lithium bis(fluorosulfonyl)imide, lithium bis-trifluoromethanesulfon imide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.

In some implementations, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane dimethyl sulfone, ethyl methyl sulfone, and diethyl sulfone. The solvent may optionally be an ether solvent. The ether solvent may include one or more of ethylene glycol dimethyl ether, ethylene glycol diethyl ether, diethylene glycol dimethyl ether, triethylene glycol dimethyl ether, 1,3-dioxolane, tetrahydrofuran, methyltetrahydrofuran, diphenylether, or a crowned ether.

The gel-state electrolyte includes a framework network with a polymer as an electrolyte, in combination with an ion liquid-a lithium salt.

The solid-state electrolyte includes a polymer solid-state electrolyte, an organic solid-state electrolyte, or a composite solid-state electrolyte.

As an example, the polymer solid-state electrolyte may be polyether (polyoxyethylene), polysiloxane, polycarbonate, polyacrylonitrile, polyvinylidene fluoride, polymethyl methacrylate, a monoionic polymer, a polyionic liquid-lithium salt, or a combination thereof.

As an example, the organic solid-state electrolyte may include one or more of an oxide solid electrolyte (crystalline perovskite, a sodium superconducting ion conductor, garnet, or an amorphous LiPON thin film), a sulfide solid electrolyte (crystalline lithium superconducting ion conductor (lithium germanium phosphorus sulfide, and argyrodite) an amorphous sulfide), a halide solid electrolyte, a nitride solid electrolyte, and a hydride solid electrolyte.

For example, the composite solid-state electrolyte is formed by filling the inorganic solid-state electrolyte into the polymeric solid-state electrolyte.

In some implementations, the electrode assembly has a wound structure. The positive electrode plate and the negative electrode plate are wound into a wound structure.

In some implementations, the electrode assembly has a laminated structure.

For example, a plurality of positive electrode plates and a plurality of negative electrode plates can be respectively arranged, and the plurality of positive electrode plates and the plurality of negative electrode plates are arranged in an alternately stacked manner.

By way of example, a plurality of positive electrode plates can be arranged, and the negative electrode plates are folded into a plurality of stacked folded segments, and one positive electrode plate is sandwiched between adjacent folded segments.

By way of example, both the positive electrode plates and the negative electrode plates are folded to form a plurality of folded segments arranged in a stacked manner.

By way of example, a plurality of separators can be arranged, which are respectively arranged between any adjacent positive electrode plates or negative electrode plates.

By way of example, the separators can be consecutively arranged between any adjacent positive electrode plates or negative electrode plates by folding or winding.

In some implementations, the shape of the electrode assembly can be cylindrical, flat, polygonal prism-shaped, etc.

In some implementations, the electrode assembly is provided with electrode tabs, and the electrode tabs can conduct current from the electrode assembly. The electrode tabs include a positive electrode tab and a negative electrode tab.

In some implementations, the cell may include a can. The can is configured to package components such as the electrode assembly and the electrolyte. The can may be a steel can, an aluminum can, a plastic can (such as a polypropylene can), a composite metal can (such as a copper-aluminum composite can), an aluminum-plastic film, or the like.

By way of example, the cell may be a cylindrical cell, a prismatic cell, a pouch cell, or a cell in another shape. The prismatic cell includes, but is not limited to, a square-can cell, a blade-shaped cell, or a polygonal prismatic battery. The polygonal prismatic battery is, for example, a hexagonal prismatic battery.

A battery mentioned in the embodiments of the present application refers to a single physical module including one or more cells to provide a higher voltage and a higher capacity.

In some embodiments, the battery may be a battery module. When there are a plurality of cells, the plurality of cells are arranged and fixedly formed into a battery module.

In some embodiments, the battery can be a battery pack. The battery pack includes a box body and a cell, and the cell or battery module is accommodated in the box body.

In some embodiments, the box body can serve as a part of a chassis structure of a vehicle. For example, a part of the box body may become at least a part of a floor of the vehicle, or a part of the box body may become at least a part of a cross beam and a longitudinal beam of the vehicle.

In some embodiments, the battery may be an energy storage device. The energy storage device includes an energy storage container, an energy storage electric cabinet, and the like.

Currently, the market trend shows that batteries are applied more extensively. Batteries are not only used in energy storage power systems such as hydro, thermal, wind, and solar power stations, but also widely used in electric means of transport such as electric bicycles, electric motorcycles, and electric vehicles, and used in many other fields such as military equipment and aerospace. The market demand for batteries keeps soaring with the increase of the application fields of the batteries.

For the development of battery technologies, various design factors, for example, performance parameters such as a battery life, an energy density, a discharge capacity, and a charge-discharge rate, all need to be taken into account. In addition, reliability of a battery also needs to be taken into account. However, reliability of the existing batteries is poor.

The battery generally includes a plurality of cells, to provide a higher voltage and capacity. In a battery, if a cell experiences thermal runaway, heat generated by the thermal runaway is easily conducted to a cell adjacent to the cell, causing a temperature of the cell adjacent to the cell to reach 200°C. However, lower plastic (an insulating member configured to insulate and isolate an end lid from an electrode assembly) of the cell melts at 160°C to 180°C. Consequently, the end lid and the electrode assembly are prone to come into direct contact with each other to cause a short circuit, which further increases the temperature of the cell, and finally, causes thermal propagation, resulting in poor reliability of the battery.

In view of the above, an embodiment of the present application provides a cell. The cell includes a can, an electrode assembly, a first insulating member, and a second insulating member. The can has a first wall portion. The electrode assembly is accommodated in the can. The electrode assembly includes a first electrode lead-out portion and a main portion. The first electrode lead-out portion is arranged at an end of the main portion facing the first wall portion along a first direction. Along the first direction, the first insulating member is arranged on a surface of the first wall portion facing the electrode assembly, and the first insulating member is configured to insulate and isolate the first electrode lead-out portion from the first wall portion. Along the first direction, at least a part of the second insulating member is arranged between the first electrode lead-out portion and the first wall portion. A material damage temperature of the second insulating member is higher than a material damage temperature of the first insulating member. The second insulating member is configured to insulate and isolate the first electrode lead-out portion from the first wall portion when the first insulating member melts.

The first insulating member and the second insulating member are arranged on the cell. During normal use, both the first insulating member and the second insulating member can insulate and isolate the first electrode lead-out portion from the first wall portion, to reduce a risk that a short circuit occurs due to contact between the first electrode lead-out portion and the first wall portion. Because the material damage temperature of the second insulating member is higher than the material damage temperature of the first insulating member, when another cell adjacent to the cell experiences thermal runaway, causing the first insulating member of the cell to melt, the second insulating member can still insulate and isolate the first electrode lead-out portion from the first wall portion to some extent, thereby reducing a risk that a short circuit occurs due to contact between the first electrode lead-out portion and the first wall portion. In this way, even if another cell adjacent to the cell experiences thermal runaway, it is less prone to a short circuit of the cell that further causes thermal runaway, which is beneficial to limiting thermal propagation and improving reliability of the cell.

The technical solution described in the embodiments of the present application is applicable to a battery and an electric device using the battery.

The electric device may be a vehicle, a mobile phone, a portable device, a laptop computer, a ship, a spacecraft, an electric toy, an electric tool, and the like. The spacecraft include an airplane, a rocket, a space shuttle, a spaceship, and the like. The electric toy includes a fixed or mobile electric toy, for example, a game console, an electric car toy, an electric ship toy, and an electric airplane toy. The electric tool includes an electrical metal cutting tool, an electrical grinding tool, an electrical assembling tool, and a power tool for use in railways. Examples of the power tool are an electrical drill, an electrical grinder, an electrical wrench, an electrical screwdriver, an electrical hammer, an electrical impact drill, a concrete vibrator, an electrical planer, and the like. Embodiments of this application do not impose special limitations on the foregoing electric device.

In the following embodiments, a vehicle 1000 is taken as an example of the electric device for the convenience of description.

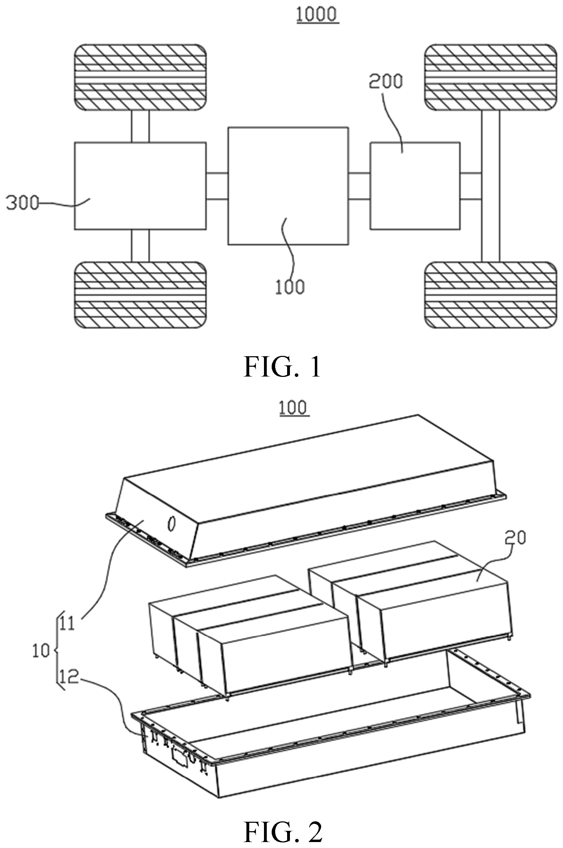

Referring to FIG. 1, FIG. 1 is a schematic structural diagram of a vehicle 1000 according to some embodiments of this application. The vehicle 1000 may be a fuel powered vehicle, a gas powered vehicle, or a new energy vehicle. The new energy vehicle may be a pure electric vehicle, a hybrid electric vehicle, an extended-range vehicle, or the like. A battery 100 is arranged inside the vehicle 1000, and the battery 100 may be arranged at the bottom, the head, or the tail of the vehicle 1000. The battery 100 may be configured to supply power to the vehicle 1000. For example, the battery 100 may be used as a power supply for operating the vehicle 1000. The vehicle 1000 may further include a controller 200 and a motor 300. The controller 200 is configured to control the battery 100 to supply power to the motor 300, for example, to meet working power requirements during starting, navigation, and traveling of the vehicle 1000.

In some embodiments of this application, the battery 100 can not only serve as a power supply for operating the vehicle 1000, but can also serve as a power supply for driving the vehicle 1000, in place of or partially in place of fuel or natural gas, to provide driving power for the vehicle 1000.

Referring to FIG. 2, FIG. 2 is an exploded view of a battery 100 according to some embodiments of this application. The battery 100 includes a box body 10 and a cell 20. The cell 20 is accommodated in the box body 10. The box body 10 is configured to provide an accommodating space for the cell 20. The box body 10 may be of a variety of structures. In some embodiments, the box body 10 may include a first portion 11 and a second portion 12. The first portion 11 and the second portion 12 cover each other, so that the first portion 11 and the second portion 12 jointly define an accommodating space for accommodating the cell 20. The second portion 12 may be of a hollow structure with one end open, the first portion 11 is a plate-shaped structure, and the first portion 11 covers the opening side of the second portion 12, so that the first portion 11 and the second portion 12 together define the accommodating space. The first portion 11 and the second portion 12 may alternatively be of a hollow structure with one side open, and the opening side of the second portion 12 covers the opening side of the first portion 11. Certainly, the box body 10 formed by the first portion 11 and the second portion 12 may be in various shapes such as a cylinder and a cuboid.

In the battery 100, there may be a plurality of cells 20, and a plurality of cells 20 can be connected in series, parallel, or series-parallel. Series-parallel connection means that both series connection and parallel connection exist among the plurality of cells 20. The plurality of cells 20 may be directly connected in series, parallel, or series-parallel, and then a whole formed by the plurality of cells 20 is accommodated in the box body 10. Certainly, the battery 100 may be a whole formed by connecting the plurality of cells 20 in series, parallel, or parallel-series first for combination in a form of a battery module, and then, connecting a plurality of battery modules in series, parallel, or parallel-series, and is accommodated in the box body 10. The battery 100 may further include other structures, for example, the battery 100 may also include a busbar component for achieving electrical connection between a plurality of cells 20.

Each cell 20 may be a secondary cell or a primary cell, and may be a lithium-sulfur cell, a sodium-ion cell, or a magnesium-ion cell, but is not limited thereto. The cell 20 may be cylindrical, flat, cuboid, or in other shapes and the like.

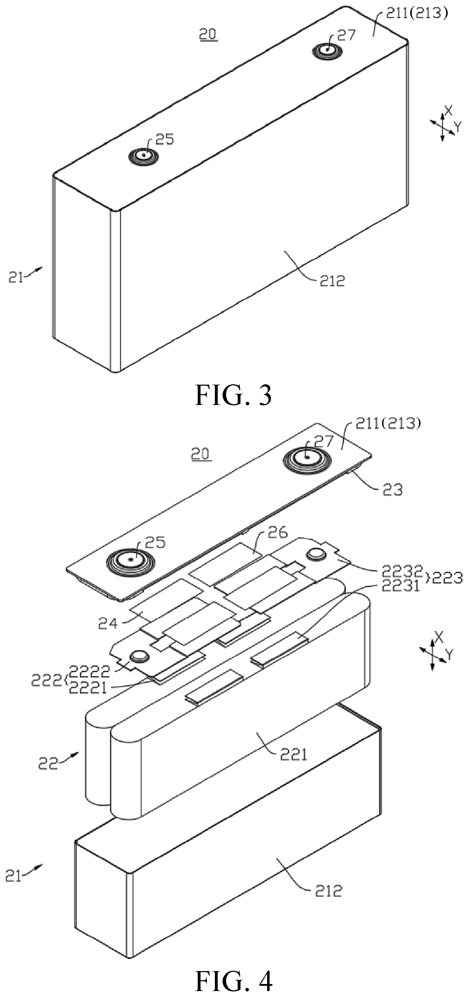

Referring to FIG. 3 and FIG. 4, FIG. 3 is a schematic structural diagram of a cell 20 according to some embodiments of this application; and FIG. 4 is an exploded view of a cell 20 according to some embodiments of this application. An embodiment of the present application provides a cell 20. The cell 20 includes a can 21, an electrode assembly 22, a first insulating member 23, and a second insulating member 24. The can 21 has a first wall portion 213. The electrode assembly 22 is accommodated in the can 21. The electrode assembly 22 includes a first electrode lead-out portion 222 and a main portion 221. The first electrode lead-out portion 222 is arranged at an end of the main portion 221 facing the first wall portion 213 along a first direction. Along the first direction, the first insulating member 23 is arranged on a surface of the first wall portion 213 facing the electrode assembly 22, and the first insulating member 23 is configured to insulate and isolate the first electrode lead-out portion 222 from the first wall portion 213. Along the first direction, at least a part of the second insulating member 24 is arranged between the first electrode lead-out portion 222 and the first wall portion 213. A material damage temperature of the second insulating member 24 is higher than a material damage temperature of the first insulating member 23. The second insulating member 24 is configured to insulate and isolate the first electrode lead-out portion 222 from the first wall portion 213 when the first insulating member 23 melts.

The cell 20 refers to a smallest unit constituting a battery 100.

The can 21 includes an end lid 211 and a case 212. The case 212 has an accommodating space that is open at one end. The accommodating space is configured to accommodate an electrode assembly 22. The end lid 211 is connected to the case 212 and closes the opening.

The end lid 211 refers to a component that covers an opening of the case 212 to isolate an internal environment of the cell 20 from an external environment. A shape of the end lid 211 is not limited and may be adapted to a shape of the case 212 to fit the case 212. Optionally, the end lid 211 may be made of a material with specified hardness and strength (for example, aluminum alloy), so that the end lid 211 is less likely to deform under extrusion and collision, enabling the cell 20 to have higher structural strength and enhanced safety performance. The end lid 211 may also be made of various materials, such as copper, iron, aluminum, stainless steel, aluminum alloy, and plastic, which are not particularly limited in the embodiments of this application.

The case 212 is a component configured to form, together with the end lid 211, an internal environment of the cells 20, where the formed internal environment may be configured to accommodate the electrode assembly 22, an electrolytic solution, and other components. The case 212 and the end lid 211 may be independent components, an opening may be provided on the case 212, and the end lid 211 covers the opening to form the internal environment of the cell 20. Without limitation, the end lid 211 and the case 212 may alternatively be integrated. Specifically, the end lid 211 and the case 212 may form a common joint surface before other components are placed into the case 212, and then the end lid 211 covers the case 212 when the interior of the case 221 needs to be enclosed. The case 212 may be of various shapes and sizes, such as a rectangular shape, a cylindrical shape, and a hexagonal prism shape. Specifically, the shape of the case 212 may be determined based on a specific shape and size of an electrode assembly 22. The case 212 may be made of various materials, such as copper, iron, aluminum, stainless steel, aluminum alloy, and plastic, which are not particularly limited in the embodiments of this application.

The electrode assembly 22 is a component in the cell 20 that undergoes electrochemical reactions. The can 21 may include one or more electrode assemblies 22. The electrode assembly 22 is mainly formed by winding or laminating a positive electrode plate and a negative electrode plate, and a separator is generally arranged between the positive electrode plate and the negative electrode plate. Parts of the positive electrode plate and the negative electrode plate with active materials constitute a main portion 221 of the electrode assembly 22, while parts of the positive electrode plate and the negative electrode plate without active materials respectively constitute electrode tabs. A positive electrode tab and a negative electrode tab may be located at one end of the main portion 221 together or at two ends of the main portion 221 respectively. During charging and discharging of the cell 100, a positive electrode active material and a negative electrode active material react with an electrolytic solution.

The first wall portion 213 may be an end lid 211 of the can 21, or may be a wall of a case 212 of the can 21. In some implementations, in FIG. 3 and FIG. 4, the first wall portion 213 is the end lid 211. In some other embodiments, the first wall portion 213 may be a bottom wall of the case 212 opposite to the end lid 211. In still some other embodiments, the first wall portion 213 may alternatively be side walls of the case 212 that are adjacent to the end lid 211 and that are connected to each other.

The first electrode lead-out portion 222 is a structure configured to lead out electric energy from the main portion 221 or lead electric energy into the main portion 221. The first electrode lead-out portion 222 includes at least the foregoing positive electrode tab or negative electrode tab, and the first electrode lead-out portion 222 may further include another electrical connection component connected to the positive electrode tab or the negative electrode tab. The first electrode lead-out portion 222 is arranged at an end of the main portion 221 facing the first wall portion 213 along a first direction. In other words, the first electrode lead-out portion 222 is located between the first wall portion 213 and the main portion 221 along the first direction.

Referring to FIG. 3 and FIG. 4, the first direction may be a direction X shown in the figures.

The first insulating member 23 is commonly referred to as lower plastic. The first insulating member 23 is arranged on an inner side of the first wall portion 213, and the first insulating member 23 is configured to insulate and isolate the first electrode lead-out portion 222 from the first wall portion 213, to reduce a risk of a short circuit. For example, the insulating member may be made of plastic, rubber, or the like.

The second insulating member 24 is partially or entirely arranged between the first electrode lead-out portion 222 and the first wall portion 213 along the first direction, to insulate and isolate the first electrode lead-out portion 222 from the first wall portion 213. During normal use of the cell 20, both the first insulating member 23 and the second insulating member 24 can insulate and isolate the first electrode lead-out portion 222 from the first wall portion 213.

A material damage temperature of a substance may be either a melting point of the substance or a decomposition temperature of the substance. If a substance undergoes a decomposition reaction at a specific temperature, the temperature is a decomposition temperature of the substance. If a substance has both a melting point and a decomposition temperature, the decomposition temperature is a material damage temperature of the substance. If a substance has a melting point and does not have a decomposition temperature, the melting point is a material damage temperature of the substance. If a substance has only a decomposition temperature and does not have a melting point, the decomposition temperature is a material damage temperature of the substance.

A material damage temperature of the second insulating member 24 is higher than a material damage temperature of the first insulating member 23. When the cell 20 experiences thermal runaway, the first insulating member 23 first reaches the material damage temperature and melts. When the first insulating member 23 melts, the second insulating member 24 can continue insulating and isolating the first electrode lead-out portion 222 from the first wall portion 213, thereby reducing a risk that a short circuit occurs due to contact between the first electrode lead-out portion 222 and the first wall portion 213.

The first insulating member 23 and the second insulating member 24 are arranged on the cell 20. During normal use, both the first insulating member 23 and the second insulating member 24 can insulate and isolate the first electrode lead-out portion 222 from the first wall portion 213, to reduce a risk that a short circuit occurs due to contact between the first electrode lead-out portion 222 and the first wall portion 213. Because the material damage temperature of the second insulating member 24 is higher than the material damage temperature of the first insulating member 23, when another cell 20 adjacent to the cell 20 experiences thermal runaway, causing the first insulating member 23 of the cell 20 to melt, the second insulating member 24 can still insulate and isolate the first electrode lead-out portion 222 from the first wall portion 213 to some extent, thereby reducing a risk that a short circuit occurs due to contact between the first electrode lead-out portion 222 and the first wall portion 213. In this way, even if another cell 20 adjacent to the cell 20 experiences thermal runaway, it is less prone to a short circuit of the cell 20 that further causes thermal runaway, which is beneficial to limiting thermal propagation and improving reliability of the cell 20.

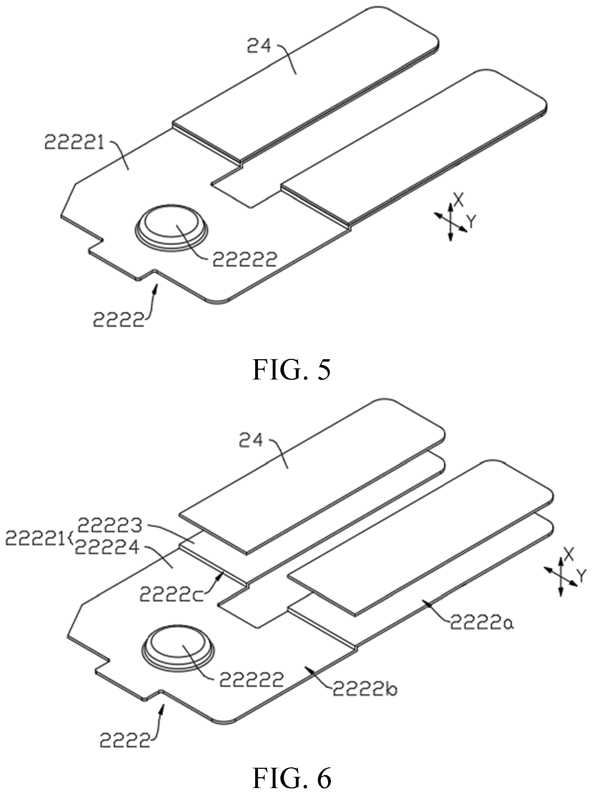

Referring to FIG. 3, FIG. 4, FIG. 5, and FIG. 6, FIG. 5 is a schematic structural diagram of a second insulating member 24 connected to a first current collecting member 2222 according to some embodiments of the present application. FIG. 6 is an exploded view of a second insulating member 24 and a first current collecting member 2222 according to some embodiments of the present application. In some embodiments, the second insulating member 24 is connected to the first electrode lead-out portion 222.

The second insulating member 24 is directly connected to the first electrode lead-out portion 222. The first insulating member 23 may be fixedly connected to the first electrode lead-out portion 222. For example, the first connecting member is adhered to the first electrode lead-out portion 222. The first insulating member 23 may alternatively be detachably connected to the first electrode lead-out portion 222. For example, the first insulating member 23 is snapped onto the first electrode lead-out portion 222.

The second insulating member 24 is connected to the first electrode lead-out portion 222. Because the first insulating member 23 is arranged on the surface of the first wall portion 213 facing the electrode assembly 22, it is more convenient to connect the second insulating member 24 to the first electrode lead-out portion 222, which is less prone to interference with the first insulating member 23. In addition, the second insulating member 24 is connected to the first electrode lead-out portion 222, which limits a relative position between the second insulating member 24 and the first electrode lead-out portion 222, so that the second insulating member 24 can be stably positioned between the first electrode lead-out portion 222 and the first wall portion 213, to insulate and isolate the first electrode lead-out portion 222 from the first wall portion 213.

Referring to FIG. 3, FIG. 4, FIG. 5, and FIG. 6, in some embodiments, the cell 20 includes a first electrode terminal 25. The first electrode terminal 25 is arranged on the first wall portion 213. The first electrode lead-out portion 222 includes a first electrode tab 2221 and a first current collecting member 2222. The first electrode tab 2221 is connected to an end of the main portion 221 facing the first wall portion 213 along the first direction. The first current collecting member 2222 is connected to the first electrode terminal 25 and the first electrode tab 2221. The second insulating member 24 is connected to the first current collecting member 2222. Along the first direction, the second insulating member 24 is at least partially located between the first current collecting member 2222 and the first wall portion 213.

The first electrode terminal 25 is configured to electrically connect to the first electrode lead-out portion 222, to input electric energy to or output electric energy from the cell 20.

The first electrode lead-out portion 222 includes a first electrode tab 2221 and a first current collecting member 2222. The first electrode tab 2221 is a positive electrode tab or a negative electrode tab. The first current collecting member 2222 is connected to the first electrode tab 2221 and the first electrode terminal 25, to direct electric energy from the electrode assembly 22 to the first electrode terminal 25 or receive electric energy introduced from the first electrode terminal 25.

Optionally, the first current collecting member 2222 may be a plate-like structure, for example, an adapter plate.

The second insulating member 24 is connected to the first current collecting member 2222, and the second insulating member 24 is partially or entirely located between the first current collecting member 2222 and the first wall portion 213 along the first direction, to insulate and isolate the first current collecting member 2222 from the first wall portion 213.

The first electrode tab 2221 is connected to the first electrode terminal 25 by the first current collecting member 2222. Compared with the first electrode tab 2221, the first current collecting member 2222 is more prone to come into contact with the first wall portion 213 to cause a short circuit. Therefore, the second insulating member 24 is connected to the first current collecting member 2222, and the second insulating member 24 is at least partially located between the first current collecting member 2222 and the first wall portion 213, to insulate and isolate the first current collecting member 2222 from the first wall portion 213, so that the second insulating member 24 has a better insulation effect, thereby further reducing a risk that a short circuit occurs on the cell 20, and helping improve reliability of the cell 20.

Referring to FIG. 5 and FIG. 6, in some embodiments, the first current collecting member 2222 includes a body portion 22221 and a protruding portion 22222. The protruding portion 22222 protrudes from the body portion 22221 along the first direction. The body portion 22221 is connected to the first electrode tab 2221. The protruding portion 22222 is connected to the first electrode terminal 25. Along the first direction, the body portion 22221 has a first surface 2222a closest to the first wall portion 213, and the second insulating member 24 covers at least a part of the first surface 2222a.

The body portion 22221 is a part of the first current collecting member 2222 mainly configured to connect to the first electrode tab 2221. The protruding portion 22222 is a part of the first current collecting member 2222 mainly configured to connect to the first electrode terminal 25. The protruding portion 22222 is connected to the body portion 22221, and the protruding portion 22222 protrudes from the body portion 22221 along the first direction.

Because the protruding portion 22222 is a part connected to the first electrode terminal 25, even if the first insulating member 23 is melted, the protruding portion 22222 is not prone to come into contact with the first wall portion 213 to cause a short circuit between the first electrode lead-out portion 222 and the first wall portion 213. Compared with the protruding portion 22222, the body portion 22221 is more prone to come into contact with the first wall portion 213 when the first insulating member 23 melts to cause a short circuit between the first electrode lead-out portion 222 and the first wall portion 213.

The first surface 2222a is a surface of the body portion 22221 closest to the first wall portion 213 along the first direction, and is also a surface of the body portion 22221 that is most prone to come into contact with the first wall portion 213 to cause a short circuit. The second insulating member 24 may cover a part of the first surface 2222a, or the second insulating member 24 may completely cover the first surface 2222a, thereby reducing a risk that the first surface 2222a comes into contact with the first wall portion 213 to cause a short circuit.

The first surface 2222a is a surface of the body portion 22221 closest to the first wall portion 213, that is, the first surface 2222a is a surface of the first current collecting member 2222 that is most prone to come into contact with the first wall portion 213 to cause a short circuit. The second insulating member 24 covers at least a part of the first surface 2222a, to insulate and isolate the first current collecting member 2222 from the first wall portion 213, so that the second insulating member 24 has a good insulation effect, which helps reduce a risk that a short circuit occurs on the cell 20, and helps improve reliability of the cell 20.

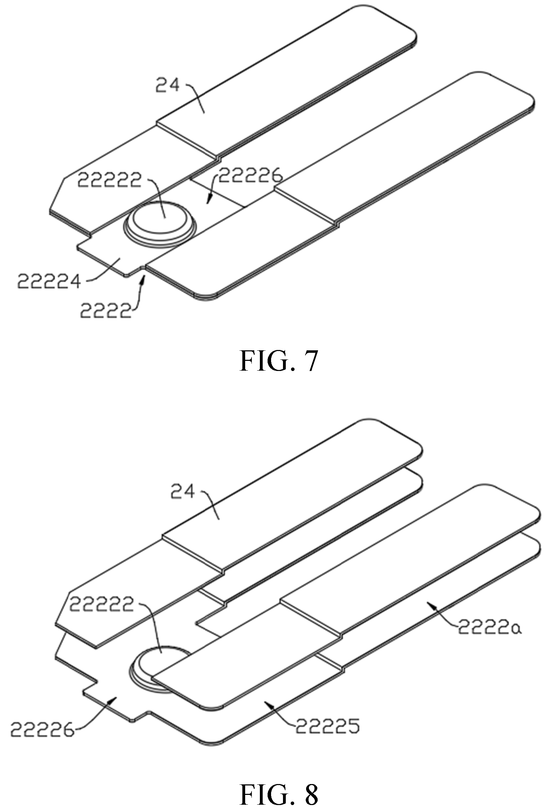

Referring to FIG. 5, FIG. 6, FIG. 7, and FIG. 8, FIG. 7 is a schematic structural diagram of a second insulating member 24 connected to a first current collecting member 2222 according to some other embodiments of the present application. FIG. 8 is an exploded view of a second insulating member 24 and a first current collecting member 2222 according to some other embodiments of the present application. In some other embodiments, along the first direction, the body portion 22221 includes a first connecting portion 22223 and a second connecting portion 22224. The second connecting portion 22224 is connected to the first connecting portion 22223, and the first electrode tab 2221 is connected to the first connecting portion 22223. Along the first direction, a surface of the first connecting portion 22223 facing the first wall portion 213 is a first surface 2222a, the second connecting portion 22224 has a second surface 2222b facing the first wall portion 213, and the first surface 2222a is closer to the first wall portion 213 than the second surface 2222b. The protruding portion 22222 protrudes from the second surface 2222b, and the second insulating member 24 covers at least a part of the second surface 2222b.

The first connecting portion 22223 is a part of the body portion 22221 mainly configured to connect to the first electrode tab 2221. The first connecting portion 22223 is connected to the second connecting portion 22224, and the protruding portion 22222 is arranged on the second connecting portion 22224, to help connect to the first electrode terminal 25, thereby reducing difficulty in connecting the first electrode terminal 25 to the first electrode tab 2221.

A surface of the first connecting portion 22223 facing the first wall portion 213 along the first direction is the first surface 2222a. That is, the surface of the first connecting portion 22223 facing the first wall portion 213 along the first direction is a surface of the body portion 22221 closest to the first wall portion 213.

The second surface 2222b is a surface of the second connecting portion 22224 facing the first wall portion 213. There is a height difference between the first surface 2222a and the second surface 2222b along the first direction. The first surface 2222a is closer to the first wall portion 213 than the second surface 2222b. In other words, along the first direction, a distance between the second surface 2222b and the first wall portion 213 is greater than a distance between the first surface 2222a and the first wall portion 213.

Along the first direction, the protruding portion 22222 protrudes from the second surface 2222b. The second insulating member 24 may cover only a part of the second surface 2222b, or the second insulating member 24 may completely cover the second surface 2222b, thereby reducing a risk that the second surface 2222b comes into contact with the first wall portion 213 to cause a short circuit.

The body portion 22221 includes the first surface 2222a and the second surface 2222b. The first surface 2222a is a surface closest to the first wall portion 213. A distance between the second surface 2222b and the first wall portion 213 is greater than a distance between the first surface 2222a and the first wall portion 213. Because both the first surface 2222a and the second surface 2222b have a risk of coming into contact with the first wall portion 213 to cause a short circuit, the second insulating member 24 is enabled to cover at least a part of the first surface 2222a and cover at least a part of the second surface 2222b, to help better insulate and isolate the first current collecting member 2222 from the first wall portion 213, so that the second insulating member 24 has a better insulation effect, which further helps reduce a risk that a short circuit occurs on the cell 20, and helps improve reliability of the cell 20.

Optionally, in some embodiments, the body portion 22221 further includes a third surface 2222c connected to the first surface 2222a and the second surface 2222b. The second insulating member 24 at least partially covers the third surface 2222c. For example, the second insulating member 24 may be adhered to and cover the third surface 2222c.

Referring to FIG. 4, FIG. 5, FIG. 6, FIG. 7, and FIG. 8, in some embodiments, the cell 20 includes a plurality of electrode assemblies 22. The plurality of electrode assemblies 22 are arranged along a second direction. The second direction intersects with the first direction. The second surface 2222b includes a covered region 22225 covered by the second insulating member 24 and a non-covered region 22226 not covered by the second insulating member 24. Along the second direction, two sides of the non-covered region 22226 are each connected to the covered region 22225. The protruding portion 22222 is arranged in the non-covered region 22226.

The second direction is an arrangement direction of the plurality of electrode assemblies 22. Referring to FIG. 4, the second direction may be a direction Y shown in the figure. An angle between the second direction and the first direction may be an acute angle or may be a right angle. In the embodiment shown in FIG. 4, the second direction is perpendicular to the first direction.

The covered region 22225 refers to a region of the second surface 2222b covered by the second insulating member 24. The non-covered region 22226 refers to a region of the second surface 2222b not covered by the second insulating member 24. The covered region 22225 is arranged on each of two sides of the non-covered region 22226 along the second direction. In other words, the second insulating member 24 covers regions of the second surface 2222b located on two sides along the second direction, and the second insulating member 24 does not cover a middle region of the second surface 2222b along the second direction.

Two sides of the non-covered region 22226 are each connected to the covered region 22225. In comparison, the covered region 22225 is closer to another cell 20 adjacent to the cell 20. When the another cell 20 experiences thermal runaway, along the second direction, regions of the first insulating member 23 close to two ends have higher temperatures, and are more prone to be melted. A position of the first insulating member 23 close to the middle has a lower temperature, and is less prone to be melted. The covered region 22225 corresponds to a region in which the first insulating member 23 is prone to be melted, and the non-covered region 22226 corresponds to a region in which the first insulating member 23 is less prone to be melted. Cooperation between the first insulating member 23 and the second insulating member 24 can effectively insulate and isolate the first current collecting member 2222 from the first wall portion 213, which helps reduce a risk that a short circuit occurs on the cell 20, and helps improve reliability of the cell 20.

Referring to FIG. 4, FIG. 5, FIG. 6, FIG. 7, and FIG. 8, in some embodiments, the cell 20 includes a plurality of electrode assemblies 22. The plurality of electrode assemblies 22 are arranged along a second direction. The second direction intersects with the first direction. The body portion 22221 includes a plurality of first connecting portions 22223. The plurality of first connecting portions 22223 are arranged at intervals along the second direction. The second connecting portion 22224 is connected to the plurality of first connecting portions 22223. Each of the first connecting portions 22223 is connected to the first electrode tab 2221 of one of the electrode assemblies 22.

The body portion 22221 may include two first connecting portions 22223, three first connecting portions 22223, four first connecting portions 22223, or more than four first connecting portions 22223. The plurality of first connecting portions 22223 are arranged at intervals along the second direction. Referring to FIG. 5, FIG. 6, FIG. 7, and FIG. 8, in the embodiments shown in FIG. 5, FIG. 6, FIG. 7, and FIG. 8, the body portion 22221 includes two first connecting portions 22223, and the two first connecting portions 22223 are spaced apart along the second direction. The second connecting portion 22224 is connected to the two first connecting portions 22223.

Each of the first connecting portions 22223 is connected to the first electrode tab 2221 of one of the electrode assemblies 22, that is, the first connecting portions 22223 and the first electrode tabs 2221 are in a one-to-one correspondence.

Each of the first connecting portions 22223 is connected to the first electrode tab 2221 of one of the electrode assemblies 22, and the second connecting portion 22224 is connected to the plurality of first connecting portions 22223, to electrically connect the first current collecting member 2222 and the first electrode tabs 2221 of the plurality of electrode assemblies 22. The first electrode tabs 2221 of the plurality of electrode assemblies 22 are connected to the first electrode terminal 25 by the first current collecting member 2222, to help reduce difficulty of assembly between the first electrode tabs 2221 and the first electrode terminal 25.

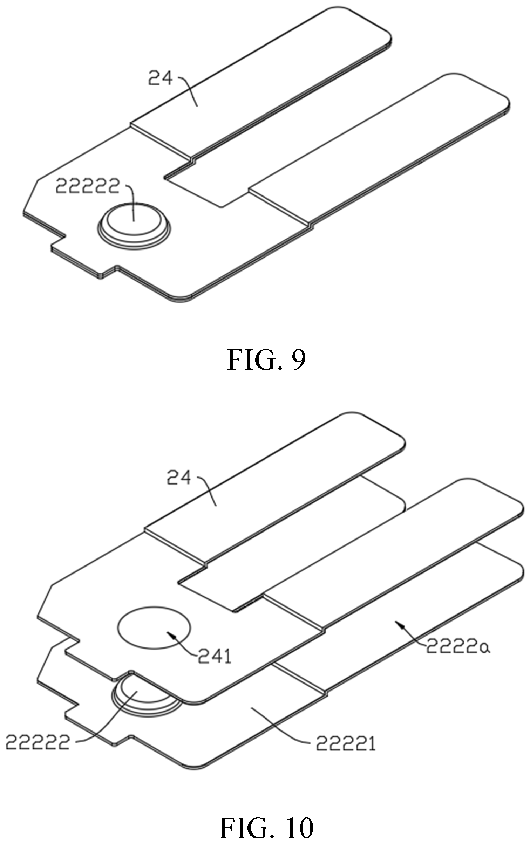

Referring to FIG. 9 and FIG. 10, FIG. 9 is a schematic structural diagram of a second insulating member 24 connected to a first current collecting member 2222 according to still some other embodiments of the present application. FIG. 10 is an exploded view of a second insulating member 24 and a first current collecting member 2222 according to still some embodiments of the present application. In some embodiments, along the first direction, the second insulating member 24 completely covers a region that is of a surface of the body portion 22221 facing the first wall portion 213 and that is not occupied by the protruding portion 22222.

Along the first direction, the surface of the body portion 22221 facing the first wall portion 213 includes a first region and a second region. The first region is occupied by the protruding portion 22222. That is, the protruding portion 22222 is arranged in the first region. The second region is a region that is of a surface of the body portion 22221 facing the first wall portion 213 and that is not occupied by the protruding portion 22222. The second insulating member 24 completely covers the second region.

By enabling the second insulating member 24 to completely cover the region that is of the surface of the body portion 22221 facing the first wall portion 213 and that is not occupied by the protruding portion 22222, the second insulating member 24 has a better insulation effect, which further reduces a risk that a short circuit occurs on the cell 20, and helps improve reliability of the cell 20.

Referring to FIG. 9 and FIG. 10, in some embodiments, the second insulating member 24 is provided with a clearance hole 241. The protruding portion 22222 passes through the clearance hole 241 and is connected to the first electrode terminal 25.

The clearance hole 241 is a through hole running through the second insulating member 24 along the first direction. A shape of the clearance hole 241 can match an outer peripheral contour of the protruding portion 22222. For example, when the outer peripheral contour of the protruding portion 22222 is circular, the clearance hole 241 is a circular hole. For another example, when the outer peripheral contour of the protruding portion 22222 is square, the clearance hole 241 is a square hole.

The protruding portion 22222 passes through the clearance hole 241. One end of the protruding portion 22222 is connected to the body portion 22221, and an other end of the protruding portion 22222 is connected to the first electrode terminal 25.

The clearance hole 241 is provided on the second insulating member 24 to allow the protruding portion 22222 to pass through, to help the protruding portion 22222 to connect to the first electrode terminal 25, thereby helping reduce material consumption of the second insulating member 24. In addition, because the protruding portion 22222 passes through the clearance hole 241, cooperation between the clearance hole 241 and the protruding portion 22222 limits a position of the second insulating member 24, making the second insulating member 24 less prone to deviate or shift, so that the second insulating member 24 can better implement an insulation function.

In some embodiments, the first electrode tab 2221 is connected to a side of the first current collecting member 2222 facing away from the first wall portion 213.

When the first electrode tab 2221 is connected to the side of the first current collecting member 2222 facing away from the first wall portion 213, a surface of the first electrode tab 2221 closest to the first wall portion 213 is connected to a surface of the first current collecting member 2222 facing away from the first wall portion 213.

When the first electrode tab 2221 is connected to the side of the first current collecting member 2222 facing away from the first wall portion 213. Compared with the first electrode tab 2221, the first current collecting member 2222 is more prone to come into contact with the first wall portion 213 to cause a short circuit. In this case, the second insulating member 24 is connected to the first current collecting member 2222, and the second insulating member 24 is at least partially located between the first current collecting member 2222 and the first wall portion 213, to insulate and isolate the first current collecting member 2222 from the first wall portion 213, so that the second insulating member 24 can produce a better insulation effect, thereby further reducing a risk that a short circuit occurs on the cell 20, and helping improve reliability of the cell 20.

In some other embodiments, the cell 20 includes a first electrode terminal 25. The first electrode terminal 25 is arranged on the first wall portion 213. The first electrode lead-out portion 222 includes a first electrode tab 2221 and a first current collecting member 2222. The first electrode tab 2221 is connected to an end of the main portion 221 facing the first wall portion 213 along the first direction, the first electrode tab 2221 is connected to a surface of the first current collecting member 2222 facing the first wall portion 213, and the first current collecting member 2222 is connected to the first electrode terminal 25. The second insulating member 24 is connected to a surface of the first electrode tab 2221 closest to the first wall portion 213.

The first electrode tab 2221 may be bent around the first current collecting member 2222, so that the first electrode tab 2221 is connected to a surface of the first current collecting member 2222 facing the first wall portion 213. In this case, along the first direction, a part of the first electrode tab is located between the first current collecting member 2222 and the first wall portion 213.

The first electrode tab 2221 has a surface closest to the first wall portion 213. The surface is located between the first current collecting member 2222 and the first wall portion 213 along the first direction. The second insulating member is connected to a surface of the first electrode tab 2221 closest to the first wall portion 213, to insulate and isolate the first electrode tab 2221 from the first wall portion 213.

The first electrode tab 2221 is connected to the first electrode terminal 25 by the first current collecting member 2222, but the first electrode tab 2221 is connected to a surface of the first current collecting member 2222 facing the first wall portion 213. Compared with the first current collecting member 2222, the first electrode tab 2221 is more prone to come into contact with the first wall portion 213 to cause a short circuit. In this case, the second insulating member 24 is connected to the surface of the first electrode tab 2221 closest to the first wall portion 213, to insulate and isolate the first electrode tab 2221 from the first wall portion 213, so that the second insulating member 24 can produce a better insulation effect, which helps reduce a risk that a short circuit occurs on the cell 20, and helps improve reliability of the cell 20.

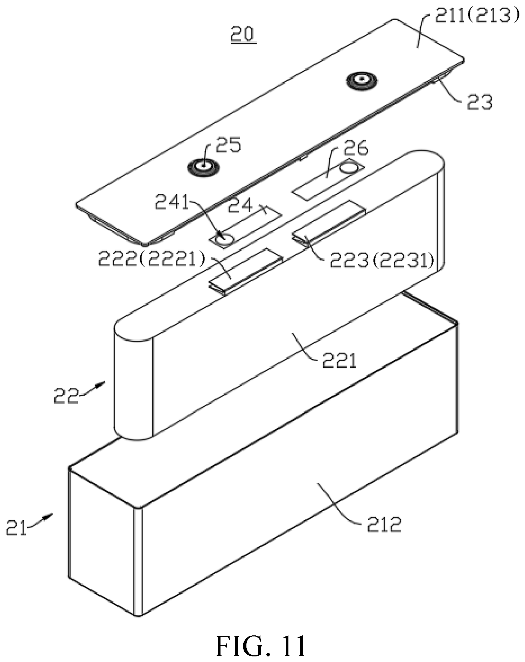

Referring to FIG. 11, FIG. 11 is an exploded view of a cell 20 according to yet some other embodiments of the present application. In some embodiments, the cell 20 includes a first electrode terminal 25. The first electrode terminal 25 is arranged on the first wall portion 213. The first electrode lead-out portion 222 includes a first electrode tab 2221. The first electrode tab 2221 is connected to the first electrode terminal 25. The second insulating member 24 is connected to the first electrode tab 2221. Along the first direction, the second insulating member 24 is at least partially located between the first electrode tab 2221 and the first wall portion 213.

The first electrode tab 2221 is a positive electrode tab or a negative electrode tab. The first electrode tab 2221 is directly connected to the first electrode terminal 25, to direct electric energy from the electrode assembly 22 to the first electrode terminal 25 or receive electric energy introduced from the first electrode terminal 25.

The second insulating member 24 is connected to the first electrode tab 2221, and the second insulating member 24 is partially or entirely located between the first electrode tab 2221 and the first wall portion 213 along the first direction, to insulate and isolate the first electrode tab 2221 from the first wall portion 213.

The first electrode tab 2221 is directly connected to the first electrode terminal 25, the second insulating member 24 is connected to the first electrode tab 2221, and the second insulating member 24 is at least partially located between the first electrode tab 2221 and the first wall portion 213, to insulate and isolate the first electrode tab 2221 from the first wall portion 213, so that the second insulating member 24 has a better insulation effect, thereby further reducing a risk that a short circuit occurs on the cell 20, and helping improve reliability of the cell 20.

In some embodiments, along the first direction, a projection of the second insulating member 24 does not overlap with a projection of the first electrode terminal 25.

"Along the first direction, a projection of the second insulating member 24 does not overlap with a projection of the first electrode terminal 25" may also be understood as that the second insulating member 24 does not cover the first electrode terminal 25, thereby helping connect the first electrode tab 2221 to the first electrode terminal 25.

The projection of the second insulating member 24 along the first direction does not overlap with the projection of the first electrode terminal 25 along the first direction, to reduce a risk that the second insulating member 24 interferes with the connection between the first electrode terminal 25 and the first electrode tab 2221, thereby helping connect the first electrode terminal 25 to the first electrode tab 2221.

Referring to FIG. 11, in some embodiments, the second insulating member 24 is provided with a clearance hole 241. The first electrode terminal 25 passes through the clearance hole 241 and is connected to the first electrode tab 2221.

The clearance hole 241 is a through hole running through the second insulating member 24 along the first direction. A shape of the clearance hole 241 can match an outer peripheral contour of the first electrode terminal 25. For example, when the outer peripheral contour of the first electrode terminal 25 is circular, the clearance hole 241 is a circular hole. For another example, when the outer peripheral contour of the first electrode terminal 25 is square, the clearance hole 241 is a square hole.

The first electrode terminal 25 passes through the clearance hole 241, and one end of the first electrode terminal 25 is connected to the first electrode tab 2221.

The clearance hole 241 is provided on the second insulating member 24 to allow the first electrode terminal 25 to pass through, to help the first electrode tab 2221 to connect to the first electrode terminal 25, thereby helping reduce material consumption of the second insulating member 24. In addition, because the first electrode terminal 25 passes through the clearance hole 241, cooperation between the clearance hole 241 and the first electrode terminal 25 limits a position of the second insulating member 24, making the second insulating member 24 less prone to deviate or shift, so that the second insulating member 24 can better implement an insulation function.

In some other embodiments, the second insulating member 24 may alternatively be arranged on the first wall portion 213. For example, the first insulating member 23 is provided with an accommodating hole, and the second insulating member 24 is connected to the first wall portion 213 and is accommodated in the accommodating hole. When another cell 20 adjacent to the cell 20 experiences thermal runaway, causing the first insulating member 23 of the cell 20 to melt, the second insulating member 24 can still insulate and isolate the first electrode lead-out portion 222 from the first wall portion 213 to some extent, thereby reducing a risk that a short circuit occurs due to contact between the first electrode lead-out portion 222 and the first wall portion 213.

In some other embodiments, along the first direction, the second insulating member 24 is arranged between the first insulating member 23 and the first wall portion 213. For example, along the first direction, the first insulating member 23 includes an insulating body and a snap portion protruding from the insulating body. The snap portion is snapped onto the first wall portion 213. The insulating body and the first wall portion 213 are spaced apart. In this case, the second insulating member 24 may be arranged between the first insulating member 23 (the insulating body) and the first wall portion 213.

In some embodiments, the second insulating member 24 is adhered to the first electrode lead-out portion 222.

In an embodiment in which the first electrode lead-out portion 222 includes the first electrode tab 2221 and the first current collecting member 2222, the second insulating member 24 is adhered to the first current collecting member 2222. In an embodiment in which the first electrode lead-out portion 222 includes only the first electrode tab 2221, the second insulating member 24 is adhered to the first electrode tab 2221.

The second insulating member 24 is adhered to the first electrode lead-out portion 222, so that the second insulating member 24 is simply and conveniently connected to the first electrode lead-out portion 222, which helps limit a position of the second insulating member 24, so that the second insulating member 24 can stably produce an insulation effect.

In some other embodiments, the second insulating member 24 covers the first electrode lead-out portion 222.

In an embodiment in which the first electrode lead-out portion 222 includes the first electrode tab 2221 and the first current collecting member 2222, the second insulating member 24 may cover only the first electrode lead-out portion 222 or may cover the first electrode tab 2221 and the first electrode lead-out portion 222. In an embodiment in which the first electrode lead-out portion 222 includes only the first electrode tab 2221, the second insulating member 24 covers the first electrode tab 2221.

The second insulating member 24 covers the first electrode lead-out portion 222, so that the first electrode lead-out portion 222 can be well covered, thereby insulating and isolating the first electrode lead-out portion 222 from the first wall portion 213. In addition, when the second insulating member 24 covers the first electrode lead-out portion 222, the second insulating member 24 is not prone to deviate or shift relative to the first electrode lead-out portion 222, so that the second insulating member 24 can better implement an insulation function.

In some embodiments, the second insulating member 24 is an insulating film connected to the first electrode lead-out portion 222.

Optionally, the second insulating member 24 is a PI film (PolyimideFilm, polyimide film) connected to the first electrode lead-out portion 222.

The second insulating member 24 is an insulating film. The insulating film can effectively insulate and isolate the first electrode lead-out portion 222 from the first wall portion 213 without occupying too much space inside the can 21, so that the cell 20 can still have a high energy density.

In some embodiments, a material damage temperature of the second insulating member 24 is higher than or equal to 300°C.

When thermal runaway occurs on another cell 20 adjacent to the cell 20, a temperature inside the cell 20 may rise to 200°C. However, the material damage temperature of the second insulating member 24 is higher than or equal to 300°C. Therefore, when the another cell 20 adjacent to the cell 20 experiences thermal runaway, the second insulating member 24 is not prone to melt, so that the second insulating member 24 can implement an insulation and isolation function, thereby reducing a risk that a short circuit occurs on the cell 20.

Optionally, a material of the second insulating member 24 includes at least one of polyimide, polyetheretherketone, and polytetrafluoroethylene.

The polyimide, polyetheretherketone, and polytetrafluoroethylene have good high-temperature resistance performance, and have good insulation effects, so that the first electrode lead-out portion 222 can be insulated and isolated from the first wall portion 213 when the temperature is higher than 200°C, thereby reducing a risk that a short circuit occurs on the cell 20, and improving reliability of the cell 20.

In some embodiments, the electrode assembly 22 includes a second electrode lead-out portion 223, and the second electrode lead-out portion 223 is connected to the main portion 221. The first electrode lead-out portion 222 and the second electrode lead-out portion 223 may be located at a same end of the main portion 221, or the first electrode lead-out portion 222 and the second electrode lead-out portion 223 may be located at two ends of the main portion 221.

When the first electrode lead-out portion 222 and the second electrode lead-out portion 223 are located at the same end of the main portion 221, the first insulating member 23 can further insulate and isolate the second electrode lead-out portion 223 from the first wall portion 213. The cell 20 further includes a third insulating member 26. Along the first direction, at least a part of the third insulating member 26 is arranged between the second electrode lead-out portion 223 and the first wall portion 213. A material damage temperature of the third insulating member 26 is higher than a material damage temperature of the first insulating member 23. The third insulating member 26 is configured to insulate and isolate the second electrode lead-out portion 223 from the first wall portion 213 when the first insulating member 23 melts.

The cell 20 includes a second electrode terminal 27. The second electrode terminal 27 is arranged on the first wall portion 213. In some embodiments, the second electrode lead-out portion 223 may include a second electrode tab 2231 and a second current collecting member 2232. The second electrode tab 2231 has an opposite polarity to that of the first electrode tab 2221. The second electrode tab 2231 is connected to an end of the main portion 221 facing the first wall portion 213 along the first direction. The second current collecting member 2232 is connected to the second electrode terminal 27 and the second electrode tab 2231. The third insulating member 26 may be connected to the second current collecting member 2232. For a specific manner in which the third insulating member 26 is connected to the second current collecting member 2232, reference may be made to the foregoing connection manner in which the second insulating member 24 is connected to the first current collecting member 2222. Details are not described herein again. In some other embodiments, the second electrode lead-out portion 223 includes a second electrode tab 2231. The second electrode tab 2231 has an opposite polarity to that of the first electrode tab 2221. The second electrode tab 2231 is connected to the second electrode terminal 27. The third insulating member 26 may be connected to the second electrode tab 2231. For a specific manner in which the third insulating member 26 is connected to the second electrode tab 2231, reference may be made to the foregoing connection manner in which the second insulating member 24 is connected to the first electrode tab 2221. Details are not described herein again.

When the first electrode lead-out portion 222 and the second electrode lead-out portion 223 are located at two ends of the main portion 221, the cell 20 further includes a third insulating member 26 and a fourth insulating member, the can 21 includes a second wall portion, and the second wall portion is arranged opposite to the first wall portion 213. The second electrode lead-out portion 223 is arranged at an end of the main portion 221 facing the second wall portion along a first direction. Along the first direction, the fourth insulating member is arranged on a surface of the second wall portion facing the electrode assembly 22, and the fourth insulating member is configured to insulate and isolate the second electrode lead-out portion 223 from the second wall portion. Along the first direction, at least a part of the third insulating member 26 is arranged between the second electrode lead-out portion 223 and the second wall portion. A material damage temperature of the third insulating member 26 is higher than a material damage temperature of the fourth insulating member. The third insulating member 26 is configured to insulate and isolate the second electrode lead-out portion 223 from the second wall portion when the fourth insulating member melts.

The cell 20 includes a second electrode terminal 27. The second electrode terminal 27 is arranged on the second wall portion. In some embodiments, the second electrode lead-out portion 223 may include a second electrode tab 2231 and a second current collecting member 2232. The second electrode tab 2231 has an opposite polarity to that of the first electrode tab 2221. The second electrode tab 2231 is connected to an end of the main portion 221 facing the second wall portion along the first direction. The second current collecting member 2232 is connected to the second electrode terminal 27 and the second electrode tab 2231. The third insulating member 26 may be connected to the second current collecting member 2232. For a specific manner in which the third insulating member 26 is connected to the second current collecting member 2232, reference may be made to the foregoing connection manner in which the second insulating member 24 is connected to the first current collecting member 2222. Details are not described herein again. In some other embodiments, the second electrode lead-out portion 223 includes a second electrode tab 2231. The second electrode tab 2231 has an opposite polarity to that of the first electrode tab 2221. The second electrode tab 2231 is connected to the second electrode terminal 27. The third insulating member 26 may be connected to the second electrode tab 2231. For a specific manner in which the third insulating member 26 is connected to the second electrode tab 2231, reference may be made to the foregoing connection manner in which the second insulating member 24 is connected to the first electrode tab 2221. Details are not described herein again.

In some embodiments, the third insulating member 26 is adhered to the second electrode lead-out portion 223.

In an embodiment in which the second electrode lead-out portion 223 includes the second electrode tab 2231 and the second current collecting member 2232, the third insulating member 26 is adhered to the second current collecting member 2232. In an embodiment in which the second electrode lead-out portion 223 includes only the second electrode tab 2231, the third insulating member 26 is adhered to the second electrode tab 2231.

The third insulating member 26 is adhered to the second electrode lead-out portion 223, so that the third insulating member 26 is simply and conveniently connected to the second electrode lead-out portion 223, which helps limit a position of the third insulating member 26, so that the third insulating member 26 can stably produce an insulation effect.

In some other embodiments, the third insulating member 26 covers the second electrode lead-out portion 223.

In an embodiment in which the second electrode lead-out portion 223 includes the second electrode tab 2231 and the second current collecting member 2232, the third insulating member 26 may cover only the second electrode lead-out portion 223 or may cover the second electrode tab 2231 and the second electrode lead-out portion 223. In an embodiment in which the second electrode lead-out portion 223 includes only the second electrode tab 2231, the third insulating member 26 covers the second electrode tab 2231.

The third insulating member 26 covers the second electrode lead-out portion 223, so that the second electrode lead-out portion 223 can be well covered, thereby insulating and isolating the second electrode lead-out portion 223 from the first wall portion 213 or the second wall portion. In addition, when the third insulating member 26 covers the second electrode lead-out portion 223, the third insulating member 26 is not prone to deviate or shift relative to the second electrode lead-out portion 223, so that the third insulating member 26 can better implement an insulation function.

In some embodiments, the third insulating member 26 is an insulating film connected to the second electrode lead-out portion 223.

Optionally, the third insulating member 26 is a PI film (PolyimideFilm, polyimide film) connected to the second electrode lead-out portion 223.

The third insulating member 26 is an insulating film. The insulating film can effectively insulate and isolate the second electrode lead-out portion 223 from the first wall portion 213 or the second wall portion without occupying too much space inside the can 21, so that the cell 20 can still have a high energy density.

In some embodiments, a material damage temperature of the third insulating member 26 is higher than or equal to 300°C.

When thermal runaway occurs on another cell 20 adjacent to the cell 20, a temperature inside the cell 20 may rise to 200°C. However, the material damage temperature of the third insulating member 26 is higher than or equal to 300°C. Therefore, when the another cell 20 adjacent to the cell 20 experiences thermal runaway, the third insulating member 26 is not prone to melt, so that the third insulating member 26 can implement an insulation and isolation function, thereby reducing a risk that a short circuit occurs on the cell 20.

Optionally, a material of the third insulating member 26 includes at least one of polyimide, polyetheretherketone, and polytetrafluoroethylene.

The polyimide, polyetheretherketone, and polytetrafluoroethylene have good high-temperature resistance performance, and have good insulation effects, so that the second electrode lead-out portion 223 can be insulated and isolated from the first wall portion 213 or the second wall portion when the temperature is higher than 200°C, thereby reducing a risk that a short circuit occurs on the cell 20, and improving reliability of the cell 20.

In some embodiments, a positive electrode material of the cell 20 includes a lithium-containing phosphate.

The cell 20 whose positive electrode material includes the lithium-containing phosphate generates a large amount of heat when experiencing thermal runaway, which is prone to melt the first insulating member 23 of the cell 20 and a first insulating member 23 of another cell 20 adjacent to the cell 20. The second insulating member 24 is arranged inside the cell 20, which helps reduce a risk that the first electrode lead-out portion 222 comes into contact with the first wall portion 213 to cause a short circuit. That is, arranging the second insulating member 24 in the cell 20 whose positive electrode material includes the lithium-containing phosphate has a better effect.

Optionally, the lithium-containing phosphate includes at least one of lithium iron phosphate, a composite material of lithium iron phosphate and carbon, lithium manganese phosphate, a composite material of lithium manganese phosphate and carbon, lithium manganese iron phosphate, and a composite material of lithium manganese iron phosphate and carbon.

An embodiment of this application further provides a battery 100. The battery 100 includes the foregoing cell 20.

An embodiment of the present application further provides an electric device. The electric device includes the foregoing cell 20.

According to some embodiments of the present application, reference may be made to FIG. 3 to FIG. 10.

An embodiment of the present application provides a cell 20. The cell 20 includes a can 21, an electrode assembly 22, a first insulating member 23, and a second insulating member 24. The can 21 has a first wall portion 213. The electrode assembly 22 is accommodated in the can 21. The electrode assembly 22 includes a first electrode lead-out portion 222 and a main portion 221. The first electrode lead-out portion 222 is arranged at an end of the main portion 221 facing the first wall portion 213 along a first direction. Along the first direction, the first insulating member 23 is arranged on a surface of the first wall portion 213 facing the electrode assembly 22, and the first insulating member 23 is configured to insulate and isolate the first electrode lead-out portion 222 from the first wall portion 213. Along the first direction, at least a part of the second insulating member 24 is arranged between the first electrode lead-out portion 222 and the first wall portion 213. A material damage temperature of the second insulating member 24 is higher than a material damage temperature of the first insulating member 23. The second insulating member 24 is configured to insulate and isolate the first electrode lead-out portion 222 from the first wall portion 213 when the first insulating member 23 melts. The first insulating member 23 and the second insulating member 24 are arranged on the cell 20. During normal use, both the first insulating member 23 and the second insulating member 24 can insulate and isolate the first electrode lead-out portion 222 from the first wall portion 213, to reduce a risk that a short circuit occurs due to contact between the first electrode lead-out portion 222 and the first wall portion 213. Because the material damage temperature of the second insulating member 24 is higher than the material damage temperature of the first insulating member 23, when another cell 20 adjacent to the cell 20 experiences thermal runaway, causing the first insulating member 23 of the cell 20 to melt, the second insulating member 24 can still insulate and isolate the first electrode lead-out portion 222 from the first wall portion 213 to some extent, thereby reducing a risk that a short circuit occurs due to contact between the first electrode lead-out portion 222 and the first wall portion 213. In this way, even if another cell 20 adjacent to the cell 20 experiences thermal runaway, it is less prone to a short circuit of the cell 20 that further causes thermal runaway, which is beneficial to limiting thermal propagation and improving reliability of the cell 20.

The cell 20 includes a first electrode terminal 25. The first electrode terminal 25 is arranged on the first wall portion 213. The first electrode lead-out portion 222 includes a first electrode tab 2221 and a first current collecting member 2222. The first electrode tab 2221 is connected to an end of the main portion 221 facing the first wall portion 213 along the first direction. The first current collecting member 2222 is connected to the first electrode terminal 25 and the first electrode tab 2221. The second insulating member 24 is connected to the first current collecting member 2222. Along the first direction, the second insulating member 24 is at least partially located between the first current collecting member 2222 and the first wall portion 213. The first electrode tab 2221 is connected to the first electrode terminal 25 by the first current collecting member 2222. Compared with the first electrode tab 2221, the first current collecting member 2222 is more prone to come into contact with the first wall portion 213 to cause a short circuit. Therefore, the second insulating member 24 is connected to the first current collecting member 2222, and the second insulating member 24 is at least partially located between the first current collecting member 2222 and the first wall portion 213, to insulate and isolate the first current collecting member 2222 from the first wall portion 213, so that the second insulating member 24 has a better insulation effect, thereby further reducing a risk that a short circuit occurs on the cell 20, and helping improve reliability of the cell 20.

In some embodiments, the first current collecting member 2222 includes a body portion 22221 and a protruding portion 22222. The protruding portion 22222 protrudes from the body portion 22221 along the first direction. The body portion 22221 is connected to the first electrode tab 2221. The protruding portion 22222 is connected to the first electrode terminal 25. Along the first direction, the body portion 22221 has a first surface 2222a closest to the first wall portion 213, and the second insulating member 24 covers at least a part of the first surface 2222a. The first surface 2222a is a surface of the body portion 22221 closest to the first wall portion 213, that is, the first surface 2222a is a surface of the first current collecting member 2222 that is most prone to come into contact with the first wall portion 213 to cause a short circuit. The second insulating member 24 covers at least a part of the first surface 2222a, to insulate and isolate the first current collecting member 2222 from the first wall portion 213, so that the second insulating member 24 has a good insulation effect, which helps reduce a risk that a short circuit occurs on the cell 20, and helps improve reliability of the cell 20.

Along the first direction, the body portion 22221 includes a first connecting portion 22223 and a second connecting portion 22224. The second connecting portion 22224 is connected to the first connecting portion 22223, and the first electrode tab 2221 is connected to the first connecting portion 22223. Along the first direction, a surface of the first connecting portion 22223 facing the first wall portion 213 is a first surface 2222a, the second connecting portion 22224 has a second surface 2222b facing the first wall portion 213, and the first surface 2222a is closer to the first wall portion 213 than the second surface 2222b. The protruding portion 22222 protrudes from the second surface 2222b. The second insulating member 24 covers at least a part of the second surface 2222b. The body portion 22221 includes the first surface 2222a and the second surface 2222b. The first surface 2222a is a surface closest to the first wall portion 213. A distance between the second surface 2222b and the first wall portion 213 is greater than a distance between the first surface 2222a and the first wall portion 213. Because both the first surface 2222a and the second surface 2222b have a risk of coming into contact with the first wall portion 213 to cause a short circuit, the second insulating member 24 is enabled to cover at least a part of the first surface 2222a and cover at least a part of the second surface 2222b, to help better insulate and isolate the first current collecting member 2222 from the first wall portion 213, so that the second insulating member 24 has a better insulation effect, which further helps reduce a risk that a short circuit occurs on the cell 20, and helps improve reliability of the cell 20.

The cell 20 includes a plurality of electrode assemblies 22. The plurality of electrode assemblies 22 are arranged along a second direction. The second direction intersects with the first direction. The second surface 2222b includes a covered region 22225 covered by the second insulating member 24 and a non-covered region 22226 not covered by the second insulating member 24. Along the second direction, two sides of the non-covered region 22226 are each connected to the covered region 22225. The protruding portion 22222 is arranged in the non-covered region 22226. Two sides of the non-covered region 22226 are each connected to the covered region 22225. In comparison, the covered region 22225 is closer to another cell 20 adjacent to the cell 20. When the another cell 20 experiences thermal runaway, along the second direction, regions of the first insulating member 23 close to two ends have higher temperatures, and are more prone to be melted. A position of the first insulating member 23 close to the middle has a lower temperature, and is less prone to be melted. The covered region 22225 corresponds to a region in which the first insulating member 23 is prone to be melted, and the non-covered region 22226 corresponds to a region in which the first insulating member 23 is less prone to be melted. Cooperation between the first insulating member 23 and the second insulating member 24 can effectively insulate and isolate the first current collecting member 2222 from the first wall portion 213, which helps reduce a risk that a short circuit occurs on the cell 20, and helps improve reliability of the cell 20.

In some other embodiments, the cell 20 includes a first electrode terminal 25. The first electrode terminal 25 is arranged on the first wall portion 213. The first electrode lead-out portion 222 includes a first electrode tab 2221. The first electrode tab 2221 is connected to the first electrode terminal 25. The second insulating member 24 is connected to the first electrode tab 2221. Along the first direction, the second insulating member 24 is at least partially located between the first electrode tab 2221 and the first wall portion 213. The first electrode tab 2221 is directly connected to the first electrode terminal 25, the second insulating member 24 is connected to the first electrode tab 2221, and the second insulating member 24 is at least partially located between the first electrode tab 2221 and the first wall portion 213, to insulate and isolate the first electrode tab 2221 from the first wall portion 213, so that the second insulating member 24 has a better insulation effect, thereby further reducing a risk that a short circuit occurs on the cell 20, and helping improve reliability of the cell 20.

The first insulating member 23 can further insulate and isolate the second electrode lead-out portion 223 from the first wall portion 213. The cell 20 further includes a third insulating member 26. Along the first direction, at least a part of the third insulating member 26 is arranged between the second electrode lead-out portion 223 and the first wall portion 213. A material damage temperature of the third insulating member 26 is higher than a material damage temperature of the first insulating member 23. The third insulating member 26 is configured to insulate and isolate the second electrode lead-out portion 223 from the first wall portion 213 when the first insulating member 23 melts.

The cell 20 includes a second electrode terminal 27. The second electrode terminal 27 is arranged on the first wall portion 213. In some embodiments, the second electrode lead-out portion 223 may include a second electrode tab 2231 and a second current collecting member 2232. The second electrode tab 2231 has an opposite polarity to that of the first electrode tab 2221. The second electrode tab 2231 is connected to an end of the main portion 221 facing the first wall portion 213 along the first direction. The second current collecting member 2232 is connected to the second electrode terminal 27 and the second electrode tab 2231. The third insulating member 26 may be connected to the second current collecting member 2232. For a specific manner in which the third insulating member 26 is connected to the second current collecting member 2232, reference may be made to the foregoing connection manner in which the second insulating member 24 is connected to the first current collecting member 2222. Details are not described herein again.

The second insulating member 24 is an insulating film adhered to the first current collecting member 2222. The second insulating member 24 is adhered to the first current collecting member 2222, so that the second insulating member 24 is simply and conveniently connected to the first current collecting member 2222, which helps limit a position of the second insulating member 24, so that the second insulating member 24 can stably produce an insulation effect. The second insulating member 24 is an insulating film. The insulating film can effectively insulate and isolate the first current collecting member 2222 from the first wall portion 213 without occupying too much space inside the can 21, so that the cell 20 can still have a high energy density.

The foregoing descriptions are merely preferred embodiments of the present application, but are not intended to limit the present application. For a person skilled in the art, the present application may have various modifications and changes. Any modification, equivalent replacement, or improvement made without departing from the spirit and principle of the present application shall fall within the protection scope of the present application.

## Claims

1. A cell, comprising:
a can, having a first wall portion;
an electrode assembly, accommodated in the can, and comprising a first electrode lead-out portion and a main portion, wherein the first electrode lead-out portion is arranged at an end of the main portion facing the first wall portion along a first direction;
a first insulating member, wherein along the first direction, the first insulating member is arranged on a surface of the first wall portion facing the electrode assembly, and the first insulating member is configured to insulate and isolate the first electrode lead-out portion from the first wall portion; and
a second insulating member, wherein along the first direction, at least a part of the second insulating member is arranged between the first electrode lead-out portion and the first wall portion, and a material damage temperature of the second insulating member is higher than a material damage temperature of the first insulating member.

2. The cell according to claim 1, wherein the second insulating member is connected to the first electrode lead-out portion.

3. The cell according to claim 2, wherein the cell comprises a first electrode terminal, arranged on the first wall portion;
the first electrode lead-out portion comprises a first electrode tab and a first current collecting member, wherein the first electrode tab is connected to an end of the main portion facing the first wall portion along the first direction, and the first current collecting member is connected to the first electrode terminal and the first electrode tab; and
the second insulating member is connected to the first current collecting member, and along the first direction, the second insulating member is at least partially located between the first current collecting member and the first wall portion.

4. The cell according to claim 3, wherein the first current collecting member comprises a body portion and a protruding portion, wherein the protruding portion protrudes from the body portion along the first direction, the body portion is connected to the first electrode tab, and the protruding portion is connected to the first electrode terminal; and
along the first direction, the body portion has a first surface closest to the first wall portion, and the second insulating member covers at least a part of the first surface.

5. The cell according to claim 4, wherein along the first direction, the body portion comprises a first connecting portion and a second connecting portion, wherein the second connecting portion is connected to the first connecting portion, and the first electrode tab is connected to the first connecting portion; and along the first direction, a surface of the first connecting portion facing the first wall portion is the first surface, the second connecting portion has a second surface facing the first wall portion, the first surface is closer to the first wall portion than the second surface, the protruding portion protrudes from the second surface, and the second insulating member covers at least a part of the second surface.

6. The cell according to claim 5, wherein the cell comprises a plurality of electrode assemblies, arranged along a second direction, wherein the second direction intersects with the first direction; and
the second surface comprises a covered region covered by the second insulating member and a non-covered region not covered by the second insulating member, wherein along the second direction, two sides of the non-covered region are each connected to the covered region, and the protruding portion is arranged in the non-covered region.

7. The cell according to claim 5 or 6, wherein the cell comprises a plurality of electrode assemblies, arranged along a second direction, wherein the second direction intersects with the first direction; and
the body portion comprises a plurality of first connecting portions, arranged at intervals along the second direction, wherein the second connecting portion is connected to the plurality of first connecting portions, and each of the first connecting portions is connected to the first electrode tab of one of the electrode assemblies.

8. The cell according to any one of claims 4 to 7, wherein along the first direction, the second insulating member completely covers a region that is of a surface of the body portion facing the first wall portion and that is not occupied by the protruding portion.

9. The cell according to any one of claims 4 to 8, wherein the second insulating member is provided with a clearance hole, wherein the protruding portion passes through the clearance hole and is connected to the first electrode terminal.

10. The cell according to any one of claims 3 to 9, wherein the first electrode tab is connected to a side of the first current collecting member facing away from the first wall portion.

11. The cell according to claim 2, wherein the cell comprises a first electrode terminal, arranged on the first wall portion;
the first electrode lead-out portion comprises a first electrode tab and a first current collecting member, wherein the first electrode tab is connected to an end of the main portion facing the first wall portion along the first direction, the first electrode tab is connected to a surface of the first current collecting member facing the first wall portion, and the first current collecting member is connected to the first electrode terminal; and
the second insulating member is connected to a surface of the first electrode tab closest to the first wall portion.

12. The cell according to claim 2, wherein the cell comprises a first electrode terminal, arranged on the first wall portion;
the first electrode lead-out portion comprises a first electrode tab, wherein the first electrode tab is connected to the first electrode terminal; and
the second insulating member is connected to the first electrode tab, and along the first direction, the second insulating member is at least partially located between the first electrode tab and the first wall portion.

13. The cell according to claim 12, wherein along the first direction, a projection of the second insulating member does not overlap with a projection of the first electrode terminal.

14. The cell according to claim 12 or 13, wherein the second insulating member is provided with a clearance hole, wherein the first electrode terminal passes through the clearance hole and is connected to the first electrode tab.

15. The cell according to any one of claims 2 to 14, wherein the second insulating member is adhered to the first electrode lead-out portion.

16. The cell according to any one of claims 2 to 15, wherein the second insulating member covers the first electrode lead-out portion.

17. The cell according to any one of claims 2 to 16, wherein the second insulating member is an insulating film connected to the first electrode lead-out portion.

18. The cell according to any one of claims 1 to 17, wherein a material damage temperature of the second insulating member is higher than or equal to 300°C.

19. The cell according to claim 18, wherein a material of the second insulating member comprises at least one of polyimide, polyetheretherketone, and polytetrafluoroethylene.

20. The cell according to any one of claims 1 to 19, wherein a positive electrode material of the cell comprises a lithium-containing phosphate.

21. The cell according to claim 20, wherein the lithium-containing phosphate comprises at least one of lithium iron phosphate, a composite material of lithium iron phosphate and carbon, lithium manganese phosphate, a composite material of lithium manganese phosphate and carbon, lithium manganese iron phosphate, and a composite material of lithium manganese iron phosphate and carbon.

22. A battery, comprising the cell according to any one of claims 1 to 21.

23. An electric device, comprising the cell according to any one of claims 1 to 21.
